# EUROPEAN PATENT APPLICATION

(11) **EP 4 738 971 A1**
(43) Date of publication of application: **06.05.2026**
(21) Application number: 24850963.0
(22) Date of filing: 05.08.2024
(51) Int. Cl.: H04W 74/08

(54) **COMMUNICATION METHOD AND APPARATUS**

(30) Priority: 10.08.2023 CN 202311011308; 28.09.2023 CN 202311294466
(71) Applicant: Huawei Technologies Co., Ltd., Shenzhen, Guangdong 518129 (CN)
(72) Inventor: LI, Jiaojiao, Shenzhen, Guangdong 518129 (CN); SHI, Yulong, Shenzhen, Guangdong 518129 (CN); LI, Chenwan, Shenzhen, Guangdong 518129 (CN); QIANG, Li, Shenzhen, Guangdong 518129 (CN)
(74) Representative: MERH-IP Matias Erny Reichl Hoffmann Patentanwälte PartG mbB
(86) International application number: PCT/CN2024/109787
(87) International publication number: WO 2025/031318

(57) **Abstract**

This application provides a communication method and apparatus, and belongs to the field of communication technologies, to enable an eRedCap terminal device and a RedCap terminal device to share a random access resource set of the RedCap terminal device. In the method, when there is no random access resource set applicable to a feature of a current random access procedure, a first-type terminal device may determine a random access resource set based on a feature of a second-type terminal device. In other words, the first-type terminal device may serve as or fall back to the second-type terminal device, and then perform a random access resource set selection process. In this way, the eRedCap terminal device and the RedCap terminal device can share the random access resource set of the RedCap terminal device, thereby improving random access resource utilization, and implementing flexible selection of a random access resource set.

## Description

This application claims priorities to Chinese Patent Application No. 202311011308.1, filed with the China National Intellectual Property Administration on August 10, 2023 and entitled "COMMUNICATION METHOD AND APPARATUS", and to Chinese Patent Application No. 202311294466.2, filed with the China National Intellectual Property Administration on September 28, 2023 and entitled "COMMUNICATION METHOD AND APPARATUS", both of which are incorporated herein by reference in their entireties.

### TECHNICAL FIELD

This application relates to the communication field, and in particular, to a communication method and apparatus.

### BACKGROUND

In the 3rd generation partnership project (3rd generation partnership project, 3GPP) release 18 (release 18, R18), an enhanced reduced capability (enhanced reduced capability, eRedCap) terminal device is introduced. Compared with a reduced capability (reduced capability, RedCap) terminal device in R17, for the eRedCap terminal device, a baseband bandwidth is further reduced.

However, when there is no random access resource set that can be used for a feature of the eRedCap terminal device in a current random access procedure, how to enable the eRedCap terminal device and the RedCap terminal device to share a random access resource set of the RedCap terminal device is a problem that needs to be urgently resolved.

### SUMMARY

Embodiments of this application provide a communication method and apparatus, to enable an eRedCap terminal device and a RedCap terminal device to share a random access resource set of the RedCap terminal device.

To achieve the foregoing objective, this application uses the following technical solutions.

According to a first aspect, a communication method is provided. The method may be performed by a terminal device, may be performed by a chip or a circuit configured in the terminal device, or may be performed by a logical module or software that can implement all or some functions of the terminal device. The method includes: When there is no random access resource set applicable to a feature of a current random access procedure, if the terminal device is a first-type terminal device, the terminal device determines a first random access resource set based on a feature of a second-type terminal device, and performs the random access procedure by using the first random access resource set. The first-type terminal device is a terminal device whose capability is reduced relative to that of the second-type terminal device.

It can be learned from the method according to the first aspect that, when there is no random access resource set applicable to the feature of the current random access procedure, the first-type terminal device may determine a random access resource set based on the feature of the second-type terminal device. In other words, the first-type terminal device may serve as or fall back to the second-type terminal device, and then perform a random access resource set selection process. Therefore, an eRedCap terminal device and a RedCap terminal device can share a random access resource set of the RedCap terminal device, so that a network device can identify the eRedCap UE based on at least a feature of the RedCap UE while improving random access resource utilization. This can increase an access success rate of the eRedCap UE while implementing flexible selection of the random access resource set.

In a possible design solution, the method according to the first aspect may further include: The terminal device receives first indication information. The first indication information indicates that the first-type terminal device is allowed to determine the first random access resource set based on the feature of the second-type terminal device. This can enhance control of the network device over a random access resource set used by the first-type terminal device, improve flexibility of configuring a random access resource by the network device, and avoid a subsequent case in which the network device cannot identify the first-type terminal device in advance.

In a possible design solution, the method according to the first aspect may further include: The terminal device receives second indication information. The second indication information indicates that the first-type terminal device is allowed to use a second random access resource set, the second random access resource set is related to the second-type terminal, and the first random access resource set is one of the second random access resource set that is allowed to be used by the first-type terminal device. In other words, the first-type terminal device can use a random access resource set, for example, the second random access resource set, only when the random access resource set is related to the second-type terminal and the network device indicates that the first-type terminal device can use the random access resource set. This can further enhance control of the network device over the random access resource set used by the first-type terminal device, improve the flexibility of configuring a random access resource by the network device, and avoid a subsequent case in which the network device cannot identify the first-type terminal device in advance.

In a possible design solution, the method according to the first aspect may further include: When there is no random access resource set applicable to the feature of the current random access procedure, if the terminal device is not the first-type terminal device, the terminal device selects a random access resource set that has no associated feature, to perform the random access procedure. In other words, when there is no random access resource set that can be used for a feature of a non-first-type terminal device in the current random access procedure, the non-first-type terminal device directly selects a random access resource set that has no associated feature, to be used in a subsequent random access procedure.

In a possible design solution, the method according to the first aspect may further include: The terminal device determines, based on an indication associated with a random access resource set and the feature of the current random access procedure, whether the random access resource set is applicable to the current random access procedure. The indication associated with the random access resource set represents a feature associated with the random access resource set. In this way, the terminal device, for example, the first-type terminal device, may determine whether there is a random access resource set applicable to the feature of the current random access procedure, to subsequently determine whether a random access resource set selection process needs to be performed based on the feature of the second-type terminal device.

In a possible design solution, the first-type terminal device is an enhanced reduced capability eRedCap terminal device, or any other possible terminal device. This is not limited. The second-type terminal is a reduced capability RedCap terminal device, or any other possible terminal device. This is not limited.

In a possible design solution, the feature includes at least one of the following: a RedCap terminal device, small data transmission, radio access network slicing, a coverage enhancement feature, or a RedCap terminal device, to meet feature requirements for triggering the current random access procedure in different scenarios.

In a possible design solution, the method according to the first aspect may further include:

If the terminal device is the first-type terminal device, and a random access resource set corresponding to a bandwidth part BWP selected by the terminal device includes only a two-step random access resource set, the terminal device determines the first random access resource set based on the feature of the second-type terminal device, and performs the random access procedure by using the first random access resource set. The first-type terminal device is a terminal device whose capability is reduced relative to that of the second-type terminal device. In this way, the first-type terminal device may directly determine the random access resource set based on the feature of the second-type terminal device, in other words, the first-type terminal device may directly serve as or fall back to the second-type terminal device, to perform the random access resource set selection process, and does not need to first perform the random access resource set selection process as the first-type terminal device, so that an operation is simpler, a waste of resources can be reduced, and random access resource utilization can be improved.

According to a second aspect, a communication method is provided. The method may be performed by a terminal device, may be performed by a chip or a circuit configured in the terminal device, or may be performed by a logical module or software that can implement all or some functions of the terminal device. The method includes: When there is no random access resource set applicable to a feature of a current random access procedure, if the terminal device is a first-type terminal device and there is a third random access resource set, the terminal device selects the third random access resource set, and performs the random access procedure by using the third random access resource set. The third random access resource set is associated with only an indication of a second-type terminal, and the first-type terminal device is a terminal device whose terminal device capability is reduced relative to that of the second-type terminal device.

It can be learned from the method according to the second aspect that, when there is no random access resource set applicable to the feature of the current random access procedure, if a network device configures a random access resource set, for example, the third random access resource set, that is associated with only the indication of the second-type terminal, the first-type terminal device may directly use the third random access resource set to perform the random access procedure. Therefore, an eRedCap terminal device and a RedCap terminal device can share a random access resource set of the RedCap terminal device, thereby improving random access resource utilization, and implementing flexible selection of a random access resource set. In addition, the network device may clearly determine which access resource sets are random access resource sets shared by the eRedCap terminal device and the RedCap terminal device. This can enhance control of the network device over a random access resource set used by the first-type terminal device, and improve flexibility of configuring a random access resource set by the network device.

In a possible design solution, the method according to the second aspect may further include: The terminal device receives third indication information. The third indication information indicates that the first-type terminal is allowed to use the third random access resource set. This can further enhance control of the network device over the random access resource set used by the first-type terminal device, improve the flexibility of configuring the random access resource set by the network device, and avoid a subsequent case in which the network device cannot identify the first-type terminal device in advance.

In a possible design solution, the method according to the second aspect may further include: When there is no random access resource set applicable to the feature of the current random access procedure and a first condition is met, the terminal device selects a random access resource set that has no associated feature, to perform the random access procedure. The first condition includes at least one of the following: The terminal device is not the first-type terminal device, or there is no random access resource set configured with only the indication of the second-type terminal. The indication of the second-type terminal represents that a non-second-type terminal device cannot use the random access resource set in a random access procedure. In other words, when there is no random access resource set that can be used for a feature of a non-first-type terminal device in the current random access procedure, or there is no random access resource set configured with only the indication of the second-type terminal, the terminal device selects the random access resource set that has no associated feature, to be used in a subsequent random access procedure.

In a possible design solution, the method according to the second aspect may further include: The terminal device determines, based on an indication associated with a random access resource set and the feature of the current random access procedure, whether the random access resource set is applicable to the current random access procedure. The indication associated with the random access resource set represents a feature associated with the random access resource set.

In a possible design solution, the first-type terminal device is an enhanced reduced capability eRedCap terminal device, and the second-type terminal device is a reduced capability RedCap terminal device.

In a possible design solution, the feature includes at least one of the following: a RedCap terminal device, small data transmission, radio access network slicing, a coverage enhancement feature, or an eRedCap terminal device.

In a possible design solution, the method according to the second aspect may further include: If the terminal device is the first-type terminal device, a RACH resource set corresponding to a bandwidth part BWP selected by the terminal device includes only a two-step RACH resource set, and there is the third random access resource set, the terminal device selects the third random access resource set, and performs the random access procedure by using the third random access resource set. In this way, the first-type terminal device may directly use the third random access resource set to perform the random access procedure, and does not need to first perform a RACH resource set selection process as the first-type terminal device, so that an operation is simpler, a waste of resources can be reduced, and random access resource utilization can be improved.

In a possible design solution, the method according to the second aspect may further include: If the terminal device is the first-type terminal device, the RACH resource set corresponding to the bandwidth part BWP selected by the terminal device includes only the two-step RACH resource set, and there is no third random access resource set that is only configured, the terminal device selects a random access resource set that has no associated feature, to perform the random access procedure. In other words, when there is no random access resource set configured with only the indication of the second-type terminal in a network, the terminal device selects the random access resource set that has no associated feature, to be used in a subsequent random access procedure.

In addition, for other technical effect of the communication method according to the second aspect, refer to the technical effect of the communication method according to the first aspect. Details are not described herein again.

According to a third aspect, a communication method is provided. The method may be performed by a terminal device, may be performed by a chip or a circuit configured in the terminal device, or may be performed by a logical module or software that can implement all or some functions of the terminal device. The method includes: When a second condition is met, the terminal device considers that a fourth feature is applicable to a current random access procedure. The second condition includes one or more of the following: There is no random access resource set meeting all features that trigger the current random access procedure; there are one or more random access resource sets that meet a subset of the feature that triggers the current random access procedure; a third feature is applicable to the current random access procedure; and a random access resource set identified by the terminal device by using the third feature does not include a random access resource set associated with the third feature. The third feature is a feature of a first-type terminal device, the fourth feature is a feature of a second-type terminal device, and the first-type terminal device is a terminal device whose capability is reduced relative to that of the second-type terminal device.

It can be learned from the method according to the third aspect that, when the second condition is met, the terminal device extends a feature applicable to the current random access procedure from the third feature to include the fourth feature, so that while the terminal device selects a random access resource set by using the third feature, a possibility that the terminal device selects an appropriate random access resource set is increased.

In a possible design solution, the method according to the third aspect may further include: The terminal device selects a random access resource set based on the feature applicable to the current random access procedure.

In a possible design solution, the method according to the third aspect may further include: The terminal device receives fourth indication information. The fourth indication information indicates that the terminal device is allowed to consider that the fourth feature is applicable to the current random access procedure. This can enhance control of a network device over a random access resource set used by the first-type terminal device, improve flexibility of configuring a random access resource by the network device, and avoid a subsequent case in which the network device cannot identify the first-type terminal device in advance.

In a possible design solution, the method according to the third aspect may further include: When the second condition is not met, the terminal device does not consider that the fourth feature is applicable to the current random access procedure. If the terminal device can select, by using the third feature, a random access resource set that triggers the current random access procedure, or the terminal device can select, by using the third feature, a random access resource set associated with the third feature, the terminal device may not use the fourth feature for selection, so that complexity of selecting a random access resource set by the terminal device is reduced.

According to a fourth aspect, a communication method is provided. The method may be performed by a terminal device, may be performed by a chip or a circuit configured in the terminal device, or may be performed by a logical module or software that can implement all or some functions of the terminal device. The method includes: When a third condition is met, the terminal device selects a fourth random access resource set. When the third condition is not met and a fourth condition is met, the terminal device selects a fifth random access resource set. The third condition is that the terminal device is provided with a first resource and the fourth random access resource set, and a feature of a first-type terminal device is applicable to a current random access procedure. The first resource is a contention-free random access resource. The fourth random access resource set is a random access resource set associated with only the feature of the first-type terminal device. The fourth condition is that the terminal device is provided with the first resource and the fifth random access resource set, and the feature of the first-type terminal device is applicable to the current random access procedure. The fifth random access resource set is a random access resource set associated with only a feature of a second-type terminal device.

It can be learned from the method according to the fourth aspect that, when a network device does not provide a random access resource set associated with the feature of the first-type terminal device, the first-type terminal device may still select a random access resource associated with the feature of the second-type terminal device, so that the network device performs scheduling or processing for the terminal device based on the second-type terminal device, and therefore a random access success rate of the terminal device is improved.

According to a fifth aspect, a communication method is provided. The method may be performed by a terminal device, may be performed by a chip or a circuit configured in the terminal device, or may be performed by a logical module or software that can implement all or some functions of the terminal device. The method includes: The terminal device receives fifth indication information. The terminal device selects a random access resource set based on the fifth indication information. The fifth indication information is used to determine availability of a sixth random access resource set, and the sixth random access resource set is a random access resource set configured with a feature indication of a second-type terminal device.

It can be learned from the method according to the fifth aspect that a network device may indicate, by using the fifth indication information, a manner of selecting a random access resource set by the terminal device, or control availability of the random access resource set by the terminal device, to increase control of a network over the random access resource set, and avoid a random access resource selection result that is not expected by the network.

According to a sixth aspect, a communication apparatus is provided. The apparatus includes modules configured to perform the method according to the first aspect, for example, a transceiver module and a processing module. The transceiver module may be configured to implement a function of receiving and sending messages by the apparatus. The processing module may be configured to implement a function of the apparatus other than receiving and sending messages.

Optionally, the transceiver module may include a sending module and a receiving module. The sending module is configured to implement a sending function of the communication apparatus according to the sixth aspect, and the receiving module is configured to implement a receiving function of the communication apparatus according to the sixth aspect.

Optionally, the communication apparatus according to the sixth aspect may further include a storage module. The storage module stores a program or instructions. When the processing module executes the program or the instructions, the communication apparatus is enabled to perform the communication method according to the first aspect.

It should be noted that, the communication apparatus according to the sixth aspect may be a terminal device, may be a chip (system) or another part or component that may be disposed in the terminal device, or may be an apparatus including the terminal device. This is not limited in this application.

In addition, for technical effect of the communication apparatus according to the sixth aspect, refer to the technical effect of the communication method according to the first aspect. Details are not described herein again.

According to a seventh aspect, a communication apparatus is provided. The apparatus includes modules configured to perform the method according to the second aspect, for example, a transceiver module and a processing module. The transceiver module may be configured to implement a function of receiving and sending messages by the apparatus. The processing module may be configured to implement a function of the apparatus other than receiving and sending messages.

Optionally, the transceiver module may include a sending module and a receiving module. The sending module is configured to implement a sending function of the communication apparatus according to the seventh aspect, and the receiving module is configured to implement a receiving function of the communication apparatus according to the seventh aspect.

Optionally, the communication apparatus according to the fourth aspect may further include a storage module. The storage module stores a program or instructions. When the processing module executes the program or the instructions, the communication apparatus is enabled to perform the communication method according to the second aspect.

It should be noted that, the communication apparatus according to the seventh aspect may be a terminal device, may be a chip (system) or another part or component that may be disposed in the terminal device, or may be an apparatus including the terminal device. This is not limited in this application. In addition, for technical effect of the communication apparatus according to the seventh aspect, refer to the technical effect of the communication method according to the second aspect. Details are not described herein again.

According to an eighth aspect, a communication apparatus is provided. The apparatus includes modules configured to perform the method according to the third aspect, for example, a transceiver module and a processing module. The transceiver module may be configured to implement a function of receiving and sending messages by the apparatus. The processing module may be configured to implement a function of the apparatus other than receiving and sending messages.

Optionally, the transceiver module may include a sending module and a receiving module. The sending module is configured to implement a sending function of the communication apparatus according to the eighth aspect, and the receiving module is configured to implement a receiving function of the communication apparatus according to the eighth aspect.

Optionally, the communication apparatus according to the eighth aspect may further include a storage module. The storage module stores a program or instructions. When the processing module executes the program or the instructions, the communication apparatus is enabled to perform the communication method according to the third aspect.

It should be noted that, the communication apparatus according to the eighth aspect may be a terminal device, may be a chip (system) or another part or component that may be disposed in the terminal device, or may be an apparatus including the terminal device. This is not limited in this application.

In addition, for technical effect of the communication apparatus according to the eighth aspect, refer to the technical effect of the communication method according to the third aspect. Details are not described herein again.

According to a ninth aspect, a communication apparatus is provided. The apparatus includes modules configured to perform the method according to the fourth aspect, for example, a transceiver module and a processing module. The transceiver module may be configured to implement a function of receiving and sending messages by the apparatus. The processing module may be configured to implement a function of the apparatus other than receiving and sending messages.

Optionally, the transceiver module may include a sending module and a receiving module. The sending module is configured to implement a sending function of the communication apparatus according to the ninth aspect, and the receiving module is configured to implement a receiving function of the communication apparatus according to the ninth aspect.

Optionally, the communication apparatus according to the ninth aspect may further include a storage module. The storage module stores a program or instructions. When the processing module executes the program or the instructions, the communication apparatus is enabled to perform the communication method according to the fourth aspect.

It should be noted that, the communication apparatus according to the ninth aspect may be a terminal device, may be a chip (system) or another part or component that may be disposed in the terminal device, or may be an apparatus including the terminal device. This is not limited in this application.

In addition, for technical effect of the communication apparatus according to the ninth aspect, refer to the technical effect of the communication method according to the fourth aspect. Details are not described herein again.

According to a tenth aspect, a communication apparatus is provided. The apparatus includes modules configured to perform the method according to the fifth aspect, for example, a transceiver module and a processing module. The transceiver module may be configured to implement a function of receiving and sending messages by the apparatus. The processing module may be configured to implement a function of the apparatus other than receiving and sending messages.

Optionally, the transceiver module may include a sending module and a receiving module. The sending module is configured to implement a sending function of the communication apparatus according to the tenth aspect, and the receiving module is configured to implement a receiving function of the communication apparatus according to the tenth aspect.

Optionally, the communication apparatus according to the tenth aspect may further include a storage module. The storage module stores a program or instructions. When the processing module executes the program or the instructions, the communication apparatus is enabled to perform the communication method according to the fifth aspect.

It should be noted that, the communication apparatus according to the tenth aspect may be a terminal device, may be a chip (system) or another part or component that may be disposed in the terminal device, or may be an apparatus including the terminal device. This is not limited in this application.

In addition, for technical effect of the communication apparatus according to the tenth aspect, refer to the technical effect of the communication method according to the fifth aspect. Details are not described herein again.

According to an eleventh aspect, a communication apparatus is provided. The communication apparatus includes a processor. The processor is configured to perform the method according to any one of the implementations of the first aspect to the fifth aspect.

In a possible design solution, the communication apparatus according to the eleventh aspect may further include a transceiver. The transceiver may be a transceiver circuit or an interface circuit. The transceiver may be used by the communication apparatus according to the eleventh aspect to communicate with another communication apparatus.

In a possible design solution, the communication apparatus according to the eleventh aspect may further include a memory. The memory and the processor may be integrated together, or may be disposed separately. The memory may be configured to store a computer program and/or data related to the method according to any one of the implementations of the first aspect to the fifth aspect.

In this application, the communication apparatus according to the eleventh aspect may be a terminal device, may be a chip (system) or another part or component that may be disposed in the terminal device, or may be an apparatus including the terminal device.

In addition, for technical effect of the communication apparatus according to the eleventh aspect, refer to the technical effect of the method according to any one of the implementations of the first aspect to the fifth aspect. Details are not described herein again.

According to a twelfth aspect, a communication apparatus is provided. The communication apparatus includes a processor. The processor is coupled to a memory. The processor is configured to execute a computer program stored in the memory, to enable the communication apparatus to perform the method according to any one of the implementations of the first aspect to the fifth aspect.

In a possible design solution, the communication apparatus according to the twelfth aspect may further include a transceiver. The transceiver may be a transceiver circuit or an interface circuit. The transceiver may be used by the communication apparatus according to the twelfth aspect to communicate with another communication apparatus.

In this application, the communication apparatus according to the twelfth aspect may be a terminal device, may be a chip (system) or another part or component that may be disposed in the terminal device, or may be an apparatus including the terminal device.

In addition, for technical effect of the communication apparatus according to the twelfth aspect, refer to the technical effect of the method according to any one of the implementations of the first aspect to the fifth aspect. Details are not described herein again.

According to a thirteenth aspect, a communication apparatus is provided. The apparatus includes a processor and a memory. The memory is configured to store a computer program. When the processor executes the computer program, the communication apparatus is enabled to perform the method according to any one of the implementations of the first aspect to the fifth aspect.

In a possible design solution, the communication apparatus according to the thirteenth aspect may further include a transceiver. The transceiver may be a transceiver circuit or an interface circuit. The transceiver may be used by the communication apparatus according to the thirteenth aspect to communicate with another communication apparatus.

In this application, the communication apparatus according to the thirteenth aspect may be a terminal device, may be a chip (system) or another part or component that may be disposed in the terminal device, or may be an apparatus including the terminal device.

In addition, for technical effect of the communication apparatus according to the thirteenth aspect, refer to the technical effect of the method according to any one of the implementations of the first aspect to the fifth aspect. Details are not described herein.

According to a fourteenth aspect, a communication apparatus is provided. The apparatus includes a processor. The processor is configured to: be coupled to a memory; and after reading a computer program in the memory, perform the method according to any one of the implementations of the first aspect to the fifth aspect based on the computer program.

In a possible design solution, the communication apparatus according to the fourteenth aspect may further include a transceiver. The transceiver may be a transceiver circuit or an interface circuit. The transceiver may be used by the communication apparatus according to the fourteenth aspect to communicate with another communication apparatus.

In this application, the communication apparatus according to the fourteenth aspect may be a terminal device, may be a chip (system) or another part or component that may be disposed in the terminal device, or may be an apparatus including the terminal device.

In addition, for technical effect of the communication apparatus according to the fourteenth aspect, refer to the technical effect of the method according to any one of the implementations of the first aspect to the fifth aspect. Details are not described herein.

According to a fifteenth aspect, a communication system is provided. The communication system includes the terminal device and the network device in the foregoing aspects.

According to a sixteenth aspect, a computer-readable storage medium is provided. The computer-readable storage medium includes a computer program or instructions. When the computer program or the instructions are run on a computer, the computer is enabled to perform the method according to any one of the implementations of the first aspect to the fifth aspect.

According to a seventeenth aspect, a computer program product is provided. The computer program product includes a computer program or instructions. When the computer program or the instructions are run on a computer, the computer is enabled to perform the method according to any one of the implementations of the first aspect to the fifth aspect.

### BRIEF DESCRIPTION OF DRAWINGS

FIG. 1 is a diagram of a CBRA-based four-step random access procedure;
FIG. 2 is a diagram of a CBRA-based two-step random access procedure;
FIG. 3 is a schematic flowchart of a method for performing a random access procedure by UE;
FIG. 4 is a schematic flowchart of performing a RACH resource set selection process by UE;
FIG. 5 is a diagram of an architecture of a communication system according to an embodiment of this application;
FIG. 6 is a schematic flowchart 1 of a communication method according to an embodiment of this application;
FIG. 7 is a schematic flowchart 2 of a communication method according to an embodiment of this application;
FIG. 8 is a schematic flowchart 3 of a communication method according to an embodiment of this application;
FIG. 9 is a schematic flowchart 4 of a communication method according to an embodiment of this application;
FIG. 10 is a schematic flowchart 5 of a communication method according to an embodiment of this application;
FIG. 11A and FIG. 11B are a schematic flowchart 6 of a communication method according to an embodiment of this application;
FIG. 12 is a schematic flowchart 7 of a communication method according to an embodiment of this application;
FIG. 13 is a schematic flowchart 8 of a communication method according to an embodiment of this application;
FIG. 14 is a diagram 1 of a structure of a communication apparatus according to an embodiment of this application; and
FIG. 15 is a diagram 2 of a structure of a communication apparatus according to an embodiment of this application.

### DESCRIPTION OF EMBODIMENTS

For ease of understanding, the following first describes technical terms in embodiments of this application.

### 1. Random access (random Access Channel, RACH)

A terminal device may access a network by using a random access procedure, to implement uplink synchronization and normal communication with a network device. The random access procedure is a procedure from the terminal device sending a random access preamble (preamble) to start to attempt to access the network to the terminal device establishing a basic signaling connection to the network. The random access procedure may be triggered by some events. For example, the terminal device may perform initial access from an idle state, perform a radio resource control (radio resource control, RRC) connection resume process from an inactive state, or perform an RRC connection reestablishment process.

Currently, the random access procedure may be classified into two types: a four-step random access procedure and a two-step random access procedure. Both the four-step random access procedure and the two-step random access procedure may support contention-based random access (contention-based random access, CBRA) and contention-free random access (contention-free Random access, CFRA). In CBRA, a terminal device in a cell selects a random access resource from a common random access resource to initiate random access. In other words, one terminal device has a risk of selecting a random access resource that is the same as that of another terminal device. Therefore, a conflict may occur subsequently. A network device uses a contention resolution mechanism to process this type of access request. In this process, a random access result is uncertain, and not all random access attempts are successful. In CFRA, a terminal device has a dedicated/independent random access resource. Therefore, no conflict exists between terminal devices. In other words, in CFRA-based four-step random access and two-step random access, because a network device allocates a dedicated random access resource to a terminal device, the terminal device may initiate random access by using the dedicated random access resource. The network device may determine, based on the random access resource used by the terminal device, the terminal device that initiates random access. Therefore, contention resolution does not need to be performed. The following specifically describes a CBRA-based four-step random access procedure and a CBRA-based two-step random access procedure.

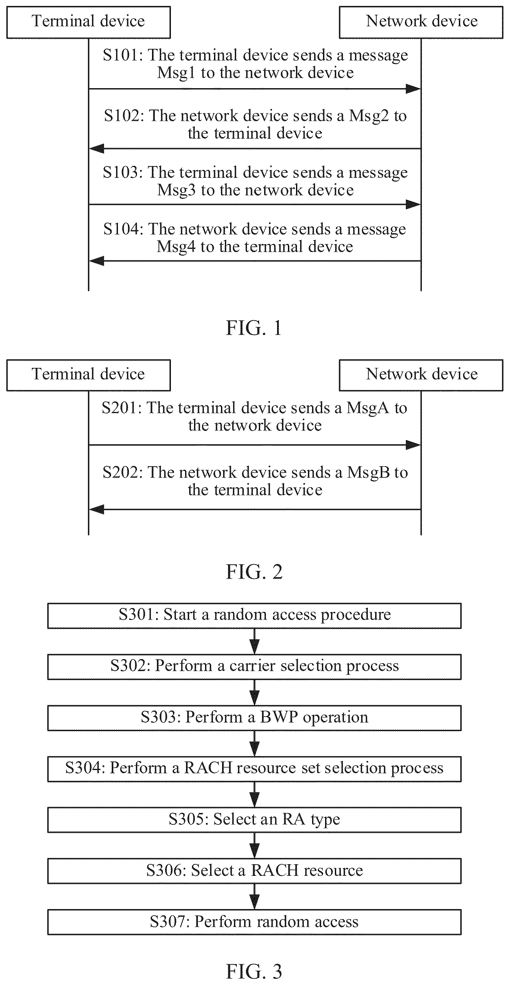

FIG. 1 is a diagram of a CBRA-based four-step random access procedure. As shown in FIG. 1, the procedure may include the following steps.

S101: A terminal device sends a message (message, Msg) 1 to a network device.

The terminal device selects a random access resource, for example, a random access channel occasion (RA channel occasion, RO), from a shared random access resource, to send the Msg1. The Msg1 includes a preamble. A function of the preamble is to notify the network device that there is a random access request, and enable the network device to calculate a transmission delay between the network device and the terminal device, so that the network device calibrates uplink timing (uplink timing) and notifies the terminal device of calibration information by using timing advance (timing advance, TA) time adjustment information.

It may be understood that before step S101, the terminal device needs to select a synchronization signal and physical broadcast channel (physical broadcast channel, PBCH) block (Synchronization Signal and PBCH block, SSB), and select an RO/preamble based on the selected SSB and a mapping relationship between an SSB and an RO/preamble. The mapping relationship is configured by the network device.

S102: The network device sends a Msg2 to the terminal device.

The network device sends the Msg2 to the terminal device based on the received preamble. The Msg2 may also be referred to as a random access response (random access response, RAR). The RAR may include a preamble identifier, the TA time adjustment information, an uplink grant (UL grant), a temporary cell radio network temporary identifier (temporary C-RNTI, TC-RNTI), and the like. The UL grant indicates a transmission resource of a Msg3.

S103: The terminal device sends the Msg3 to the network device.

The terminal device sends the Msg3 on the transmission resource indicated/scheduled by the UL grant. The Msg3 may include layer 2 (layer 2, L2) information and/or layer 3 (layer 3, L3) information, for example, an RRC setup request (RRC setup request) message, an RRC resume request (RRC resume request), a beam failure recovery (beam failure recovery, BFR), or a media access control (media access control, MAC) control element (control element, CE).

S104: The network device sends a Msg4 to the terminal device.

The Msg4 may include a contention resolution message, and the contention resolution message includes an identifier (identity, ID) of the terminal device. When it is determined from the Msg3 that the random access is contention-based random access, information about terminal devices that need to perform contention is stored. When contention is resolved by using the Msg4, contention resolution is performed on the terminal devices that perform contention.

It should be noted that FIG. 1 in embodiments of this application is merely a diagram, and does not constitute any limitation on the protection scope of embodiments of this application. For specific descriptions of the CBRA-based four-step random access procedure, refer to related descriptions in a 3GPP protocol. Details are not described.

FIG. 2 is a diagram of a CBRA-based two-step random access procedure. As shown in FIG. 2, the procedure may include the following steps.

S201: A terminal device sends a MsgA to a network device.

The MsgA may include a preamble, a physical uplink shared channel (physical uplink shared channel, PUSCH) payload (payload), and the like. The UE sends the random access preamble on a PRACH resource or an RO. In other words, the MsgA includes content in the Msg1 and the Msg3 in the foregoing CBRA-based four-step random access procedure.

It may be understood that, different from the four-step random access procedure, in the two-step random access procedure, the terminal device sends the PUSCH payload while sending the preamble.

S202: The network device sends a MsgB to the terminal device.

The MsgB may include a success RAR (successRAR) or a fallback RAR (fallbackRAR), for example, a contention resolution response, a fallback indication, and a backoff indication.

It may be understood that if the network device successfully receives and decodes the MsgA (that is, the preamble and the PUSCH payload) sent by the terminal device, the network device may return the success RAR to the terminal device. The success RAR may include a contention resolution identifier of the terminal device, TA time adjustment information, a cell radio network temporary identifier (C-RNTI), and the like.

If the network device successfully receives and decodes the preamble sent by the terminal device, but fails to receive and decode the PUSCH payload sent by the terminal device, the network device may return the fallback RAR to the terminal device. The fallback RAR may include a preamble identifier, TA time adjustment information, an uplink grant, a TC-RNTI, and the like.

It should be noted that FIG. 2 in embodiments of this application is merely a diagram, and does not constitute any limitation on the protection scope of embodiments of this application. For specific descriptions of the CBRA-based two-step random access procedure, refer to related descriptions in a 3GPP protocol. Details are not described.

### 2. Random access channel (Random Access Channel, RACH) resource partition

In 3GPP Rel-17, independent PRACH resources need to be configured for a plurality of features/work items, so that a network device can identify the features in advance and perform corresponding processing operations. The following uses the following features as examples for specific description.

### (1) Reduced capability (reduced capability, RedCap)

A reduced capability terminal device (RedCap user equipment, RedCap UE) may mean that a maximum channel bandwidth supported by the UE is reduced, for example, a baseband bandwidth of the RedCap UE is 20 MHz, or a quantity of antennas of the UE is reduced. It may be understood that, because a bandwidth supported by the RedCap UE is smaller than that supported by conventional UE, the network device needs to identify the RedCap UE in advance based on a Msg1, so that the network device can perform special processing on the RedCap UE in a subsequent RACH procedure. For example, an uplink resource that is for a Msg3 and that is scheduled in a RAR does not exceed the maximum bandwidth supported by the RedCap UE, and the RedCap UE is appropriately configured in a Msg4.

It may be understood that the network device may not identify the RedCap UE in advance based on the Msg1, but identify the RedCap UE based on the Msg3. For example, when an initial uplink bandwidth part (bandwidth part, BWP) configured by the network device does not exceed 20 MHz, the network device may identify the RedCap UE based on the Msg3.

It should be noted that RedCap should be understood as a terminal device type. For unified descriptions with the following three features, RedCap may also be described as a "feature" below. In other words, RedCap may be understood as a feature supported by the terminal device.

### (2) Small data transmission (small data transmission, SDT)

UE in an RRC inactive (RRC_INACTIVE) state may perform RACH-based small data transmission, in other words, the UE also sends small data when sending a Msg3, and the UE can perform cell data transmission without entering a connected state, so that power consumption is reduced. Therefore, the UE needs to report, in a Msg1, that the UE requests small data transmission, so that the network device can schedule a large Msg3 transmission resource for the UE in a RAR.

### (3) Coverage enhancement (coverage enhancement, CovEnh)

CovEnh studies how to improve coverage performance of a Msg3. To be specific, UE may report, in a Msg1, that coverage enhancement is required. Therefore, the network device may schedule repetition (repetition) of the Msg3.

### (4) Radio access network slicing (RAN slicing)

For radio access network slicing, considering that some services or users have high priorities, the network device may provide dedicated RACH resources for the services or users, so that high priorities of slices can be indicated to the network device. In this way, RACH resource isolation is implemented.

It may be understood that, the network device may need to configure independent RACH resources not only for the foregoing four features, but also for feature combinations of the foregoing features. For example, if the RedCap UE triggers RACH-based small data transmission, the network needs to identify, in a Msg1, that the UE is RedCap UE, to perform special processing on the RedCap UE in a subsequent RACH procedure. In addition, the network needs to identify, in the Msg1, that the UE requests SDT, so that small data transmission is considered when a Msg3 resource is configured. In this case, the network device needs to configure an independent RACH resource for a scenario in which the RedCap UE triggers RACH-based small data transmission, which may be represented as a feature combination of RedCap+SDT.

It should be noted that a specific name of the feature combination is not limited in embodiments of this application, provided that the feature combination includes a plurality of features. The features in the feature combination may be connected with "+", "and", any other possible connection symbol, or no connection symbol. This is not limited. For example, "SDT+RedCap" may be directly represented as "SDT, RedCap".

Therefore, during configuration performed by the network device, the network device may configure dedicated RACH resources for all features or feature combinations (for example, the foregoing four features, the feature combinations of the four features, or a combination of the feature or the feature combination and two-step random access), or may configure a dedicated RACH resource only for a part of features or feature combinations. A dedicated or independent RACH resource of each feature or feature combination may be referred to as a RACH partition (RACH partition) or a RACH resource set (set of RACH resources).

The network device may indicate, by using a feature combination (featureCombination) field, availability (or applicability) of the RACH resource set or a feature associated with the RACH resource set. Each RACH resource set corresponds to one feature combination field. The feature combination field may include the following parameters (which may also be referred to as feature indications): redCap, small data (smallData), Msg3 repetitions (msg3-Repetitions), a spare bit (spare), and the like. When redCap-r17 is set to true (true), it indicates that non-RedCap UE cannot use the RACH resource set. When smallData-r17 is set to true, it indicates that the RACH resource set cannot be used in a non-SDT-triggered RACH procedure. When msg-Repetitions-r17 is set to true, it indicates that the RACH resource set cannot be used in a RACH procedure to which Msg3 repetition (that is, CovEnh) is not applicable.

For example, in a feature combination field corresponding to a RACH resource set #1, redCap-r17 and smallData-r17 are set to true, and RACH-based small data transmission triggered by the RedCap UE may use the RACH resource set #1. That is, a feature combination associated with the RACH resource set #1 is RedCap+SDT, or features associated with the RACH resource set #1 are RedCap and SDT.

### 3. Random access procedure

FIG. 3 is a schematic flowchart of a method for performing a random access procedure by UE. As shown in FIG. 3, the method includes the following steps.

S301: The UE starts the random access procedure.

S302: The UE performs a carrier selection process.

The UE may select a carrier from a normal uplink (normal uplink, NUL) or a supplementary uplink (supplementary uplink, SUL) for subsequent random access.

S303: The UE performs a BWP operation.

If there is no PRACH configuration on a currently active BWP of the UE, the UE performs the RACH procedure on the initial BWP.

S304: The UE performs a RACH resource set selection process.

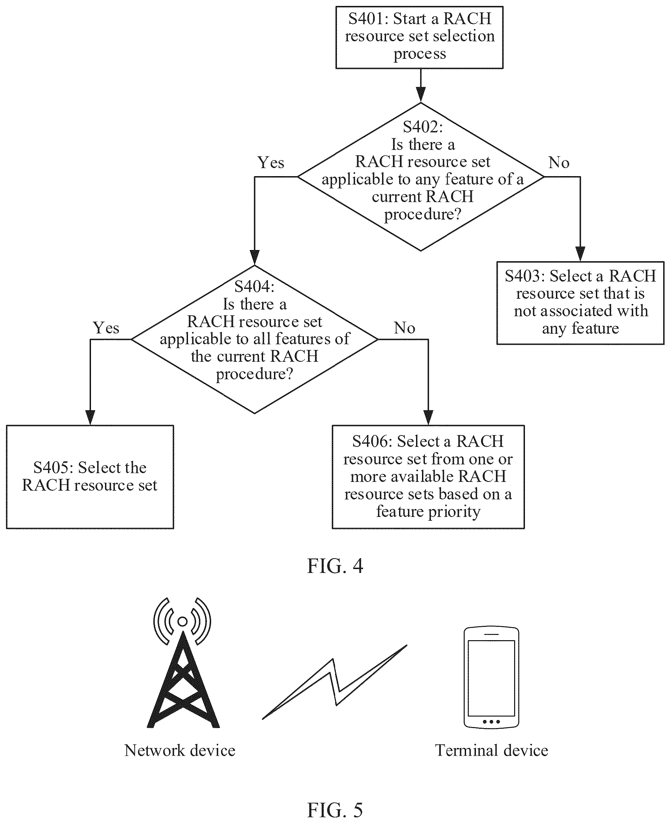

For specific implementation of this step, refer to the following schematic flowchart shown in FIG. 4. Details are not described herein.

S305: The UE selects an RA type.

The UE may determine whether to perform a four-step random access procedure or a two-step random access procedure. If the RACH resource set selected by the UE includes two-step and four-step RACH resource sets, the UE determines, based on a downlink path loss, to select a four-step RA type or a two-step RA type. If the RACH resource set selected by the UE includes only a two-step RACH resource, the UE selects a two-step RA type. If the RACH resource set selected by the UE includes only a four-step RACH resource, the UE selects a four-step RA type. This is not limited.

S306: The UE selects a RACH resource.

The UE may select the corresponding RACH resource from the RACH resource set based on the selected RA type, for example, select a preamble and an RO. This is not limited.

S307: The UE performs random access.

It may be understood that, for specific implementation of this step, reference may be made to the implementation processes shown in FIG. 1 and FIG. 2. Details are not described again.

The following describes a specific implementation process of step S304. FIG. 4 is a schematic flowchart of performing a RACH resource set selection process by UE. As shown in FIG. 4, the process may include the following steps.

S401: The UE starts the RACH resource set selection process.

S402: The UE determines whether there is a RACH resource set applicable to any feature of a current RACH procedure.

The RACH resource set is a resource set that is configured by a network device and that is used by the UE to perform random access. The feature of the current RACH procedure may include at least one of the following: RedCap, SDT, CovEnh, or RAN slicing.

The UE needs to perform determining for each four-step RACH resource set and each two-step RACH resource set that are configured by a network. If redCap-17 of a RACH resource is set to true, it indicates that the RACH resource set cannot be used in a RACH procedure to which the RedCap feature is not applicable. If smallData-17 of a RACH resource is set to true, it indicates that the RACH resource set cannot be used in a RACH procedure that is not triggered by RACH-based SDT. If a RACH resource is configured with an associated slice list, it indicates that the RACH resource set cannot be used in a RACH procedure triggered by a slice that is not in the slice list. If msg3-Repetitions of a RACH resource is set to true, it indicates that the RACH resource set cannot be used in a RACH procedure to which Msg3 repetition is not applicable.

The UE may determine, by using a feature combination field associated with each RACH resource set, whether there is a RACH resource set applicable to any feature of the current RACH procedure.

That the UE determines whether there is a RACH resource set applicable to any feature of the current RACH procedure may also be understood as that the UE determines whether there is a RACH resource set whose associated feature is a subset or a full set of the feature of the current RACH procedure. It may be understood that step S402 may include a case 1 and a case 2, which are specifically described below.

Case 1: If there is no RACH resource set applicable to any feature of the current RACH procedure, perform S403: The UE selects a RACH resource set that is not associated with any feature.

The RACH resource set that is not associated with any feature may be understood as follows: The RACH resource set is not configured with a feature combination field, or the RACH resource set is a normal RACH resource set.

For example, five RACH resource sets configured by the network device and associated features (or feature combinations) are respectively: a RACH resource set #1 and an associated feature Redcap, a RACH resource set #2 and an associated feature combination RedCap+SDT, a RACH resource set #3 and an associated feature combination SDT+slicing, a RACH resource set #4 and an associated feature combination RedCap+CovEnh, and a RACH resource set #5 and an associated feature combination SDT+CovEnh+slicing. If features that trigger (or are applicable to) a current RACH procedure #1 are SDT+CovEnh, there is no RACH resource set applicable to SDT+CovEnh in the five RACH resource sets, and the UE may select a RACH resource set that has no associated feature.

Case 2: If there is a RACH resource set applicable to any feature of the current RACH procedure, perform S404: The UE determines whether there is a RACH resource set applicable to all features of the current RACH resource procedure.

That there is a RACH resource set applicable to all the features of the current RACH resource set may also be understood as that a feature (or a feature combination) associated with the RACH resource set is a feature (or a feature combination) that triggers the current RACH procedure, in other words, the feature (or the feature combination) associated with the RACH resource set is completely the same as the feature (or the feature combination) of the current RACH procedure.

It may be understood that step S404 may include a case 2.1 and a case 2.2a, which are specifically described below.

Case 2.1: If there is a RACH resource set applicable to all the features of the current RACH procedure, perform S405: The UE selects the RACH resource set.

The five RACH resource sets configured by the network device are still used as an example. If features of a current RACH procedure #2 are RedCap+CovEnh, the RACH resource set #4 in the five RACH resource sets may meet all features of the current RACH procedure #2, and the UE may select the RACH resource set #4.

Case 2.2: If there is no RACH resource set applicable to all the features of the current RACH procedure, perform S406: The UE performs selection from one or more available RACH resource sets based on a feature priority.

It may be understood that the network device may configure a priority of each feature by using a feature priority (featurePriorities) field. The feature priority field may include a RedCap priority (redCapPriority), an SDT priority (sdt-Priority), a msg3 repetition priority (msg3-Repetitions-Priority), a slicing priority (slicingPriority), and the like. Value ranges of redCapPriority, sdt-Priority, msg3-Repetitions-Priority-r17, and slicingPriority-r17 may be 0 to 7. A smaller value indicates a higher priority.

For example, if a value of redCapPriority-r17 is 0, a value of sdt-Priority-r17 is 2, a value of msg3-Repetitions-Priority-r17 is 5, and a value of slicingPriority-r17 is 4, priorities of the foregoing features satisfy RedCap>SDT>RAN slicing>CovEnh.

The available RACH resource set may be understood as that a feature associated with the RACH resource set is a subset of the feature of the current RACH procedure. The UE may select a RACH resource set from the one or more available RACH resource sets based on the feature priority, which is specifically described below.
(1) The UE may first identify, based on a feature with a highest priority of the current RACH procedure, a RACH resource set associated with the feature.
(2) The UE may identify, in the identified RACH resource set based on a feature with a second highest priority, a RACH resource set associated with the feature.

The rest may be deduced by analogy until the UE identifies only one RACH resource set, and the UE selects the RACH resource set.

For example, a feature priority sequence configured by the network device is RedCap>SDT>RAN slicing>CovEnh, and an example in which features of a current RACH procedure #3 are RedCap+CovEnh+slicing+SDT is used. In the foregoing five RACH resource sets, there are RACH resource sets (that is, the RACH resource set #1 to the RACH resource set #5) applicable to the current RACH procedure #3, and there is no RACH resource set applicable to all the features of the current RACH procedure #3. Therefore, first, the UE may identify three RACH resource sets in the five available RACH resource sets based on RedCap with the highest priority of the current RACH procedure #3, where the three RACH resource sets are the RACH resource set #1, the RACH resource set #2, and the RACH resource set #4. Then, the UE may identify one RACH resource set, that is, the RACH resource set #2, from the three RACH resource sets based on SDT with the second highest priority of the current RACH procedure #3. Therefore, the UE may select the RACH resource set #2.

It should be noted that the random access procedure and the random access channel procedure in embodiments of this application may be replaced with each other, and details are not described subsequently.

Currently, in 3GPP Rel-18, to further reduce complexity of a terminal device and further reduce costs, eRedCap is introduced. Compared with RedCap UE, eRedCap UE has a lower terminal device capability. A further reduced capability includes a size of a baseband bandwidth. For example, a maximum baseband bandwidth of the RedCap UE is 20 MHz, and a maximum baseband bandwidth of the eRedCap UE is reduced to 5 MHz. In a RACH procedure, to enable a network device to identify the eRedCap UE in advance, and therefore perform a corresponding operation on the eRedCap UE during RAR scheduling, for example, increase an interval between a receiving time point of a RAR and a sending time point of a Msg3 scheduled by the RAR, the network device may also configure a dedicated RACH resource set for the eRedCap UE.

Whether the RACH resource set is associated with a feature of the eRedCap UE may be indicated by using a spare bit in the feature combination field. For example, the spare bit may be used as an eRedCap indication (eRedCap indication, for example, eRedCap-r18). The eRedCap indication indicates that eRedCap is a part of a feature combination associated with the RACH resource set. If the eRedCap indication associated with the RACH resource set is set to true, non-eRedCap UE cannot use the RACH resource set. It may be understood that the network device cannot set both redCap-17 and the eRedCap indication to true. In other words, one RACH resource set cannot be used by both the RedCap UE and the eRedCap UE. This is because from the perspective of the RedCap UE, when a spare bit (for example, a spare bit used by the eRedCap indication) is set to true, the RedCap UE needs to ignore the RACH resource set. Therefore, although the network device sets both redCap-17 and an eRedCap indication of a RACH resource set to true, the RedCap UE cannot use the RACH resource set.

It may be understood that whether the RACH resource set is associated with the feature of the eRedCap UE may alternatively be indicated by using any other possible field or parameter. This is not limited.

A feature priority of the eRedCap UE may be indicated by using the foregoing feature priority field. To be specific, the network device may indicate priorities of RedCap, eRedCap, SDT, CovEnh, and RAN slicing by using the feature priority field. It may be understood that the feature priority of the eRedCap UE may alternatively be indicated by using any other possible field or parameter, or may be indicated together with another feature. This is not limited herein.

Currently, in a four-step random access procedure, the network device may configure a dedicated RACH resource set for the eRedCap UE, or may not configure a dedicated RACH resource set for the eRedCap UE. However, in a two-step random access procedure, the network device cannot configure a dedicated RACH resource set for the eRedCap UE. When the network device does not configure a dedicated RACH resource set for the eRedCap UE, the eRedCap UE may share a RACH resource set of the RedCap UE with the RedCap UE. However, considering that the RACH resource set of the RedCap UE may be configured and used in combination with another feature, when the network device does not configure a dedicated RACH resource set for the eRedCap UE, how to enable the eRedCap UE and the RedCap UE to share the random access resource set of the RedCap UE is a problem that needs to be urgently resolved.

For the foregoing technical problem, embodiments of this application provide the following technical solutions, to enable an eRedCap terminal device and a RedCap terminal device to share a random access resource set of the RedCap terminal device.

The following describes the technical solutions in embodiments of this application with reference to accompanying drawings.

The technical solutions in embodiments of this application may be applied to various communication systems, for example, a wireless fidelity (wireless fidelity, Wi-Fi) system, a vehicle-to-everything (vehicle-to-everything, V2X) communication system, a device-to-device (device-to-device, D2D) communication system, 4G, for example, a long term evolution (long term evolution, LTE) system, a worldwide interoperability for microwave access (worldwide interoperability for microwave access, WiMAX) communication system, 5G, for example, a new radio (new radio, NR) system, and a future communication system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be further used.

In addition, in embodiments of this application, terms such as "example" and "for example" are used to represent giving an example, an illustration, or a description. Any embodiment or design solution described as an "example" in this application should not be explained as being more preferred or having more advantages than another embodiment or design solution. Exactly, the term "example" is used to present a concept in a specific manner.

In embodiments of this application, terms "information (information)", "signal (signal)", "message (message)", "channel (channel)", and "signaling (signaling)" may be interchangeably used sometimes. It should be noted that meanings expressed by the terms are matchable when differences of the terms are not emphasized. Terms "of (of)", "corresponding, relevant (corresponding, relevant)", and "corresponding (corresponding)" may be interchangeably used sometimes. It should be noted that meanings expressed by the terms are matchable when differences of the terms are not emphasized. In addition, "/" mentioned in this application may indicate an "or" relationship. It may be understood that, in this application, an "indication" may include a direct indication, an indirect indication, an explicit indication, and an implicit indication. When a piece of indication information is described as indicating A, it may be understood as that the indication information carries A, directly indicates A, or indirectly indicates A.

In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information itself or an index of the to-be-indicated information, may be directly indicated, and a manner in which the to-be-indicated information may be indirectly indicated by indicating other information. There is an association relationship between the other information and the to-be-indicated information. Alternatively, only a part of the to-be-indicated information may be indicated, and the other part of the to-be-indicated information is known or pre-agreed on. For example, specific information may alternatively be indicated based on an arrangement sequence of pieces of information that is pre-agreed on (for example, specified in a protocol), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit-end device by sending configuration information to a receive-end device.

A network architecture and a service scenario described in embodiments of this application are intended to describe the technical solutions of embodiments of this application more clearly, and do not constitute a limitation on the technical solutions provided in embodiments of this application. A person of ordinary skill in the art may know: With evolution of the network architecture and emergence of new service scenarios, the technical solutions provided in embodiments of this application are also applicable to similar technical problems.

For ease of understanding embodiments of this application, a communication system shown in FIG. 5 is first used as an example to describe in detail a communication system applicable to embodiments of this application. For example, FIG. 5 is a diagram of an architecture of a communication system to which a communication method according to embodiments of this application is applicable.

As shown in FIG. 5, the communication system mainly includes a network device and a terminal device.

There may be a plurality of network devices, for example, a first network device, a second network device, and a third network device. The network device may be a device having a wireless transceiver function, or may be a chip or a chip system disposed in the device, and is located in an access network (access network, AN) of the communication system, to provide an access service for the terminal. For example, the network device may be referred to as a radio access network (radio access network, RAN) device, and may be specifically an access network device in a next-generation mobile communication system, for example, a 6G mobile communication system. For example, the network device may be a 6G base station. Alternatively, in the next-generation mobile communication system, the network device may be named in another manner, which falls within the protection scope of embodiments of this application. This is not limited in this application. Alternatively, the network device may include a gNB in 5G, for example, a new radio (new radio, NR) system, may include one or a group of antenna panels (including a plurality of antenna panels) of a base station in 5G, or may be a network node that forms a gNB, a transmission point (transmission reception point, TRP, or transmission point, TP), or a transmission measurement function (transmission measurement function, TMF). For example, the network device may be a central unit (central unit, CU), a distributed unit (distributed unit, DU), a CU-control plane (control plane, CP), a CU-user plane (user plane, UP), a radio unit (radio unit, RU), an RSU having a base station function, a wired access gateway, or a 5G core network element. Alternatively, the network device may include an access point (access point, AP), a wireless relay node, a wireless backhaul node, macro base stations in various forms, a micro base station (also referred to as a small cell), a relay station, an access point, a wearable device, a vehicle-mounted device, and the like in a wireless fidelity (wireless fidelity, Wi-Fi) system.

The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

A form of the network device is not limited in embodiments of this application. An apparatus for implementing a function of the network device may be a network device, or may be an apparatus, for example, a chip system, that can support the network device in implementing the function. The apparatus may be mounted in the network device or used together with the network device.

There may be one or more terminal devices, for example, a first terminal device, a second terminal device, and a third terminal device. The terminal device may be a terminal device having a transceiver function, or may be a chip or a chip system disposed in the terminal device. The terminal device may also be referred to as user equipment (user equipment, UE), an access terminal device, a subscriber unit (subscriber unit), a subscriber station, a mobile station (mobile station, MS), a remote station, a remote terminal device, a mobile device, a user terminal device, a terminal device, a wireless communication device, a user agent, or a user apparatus. The terminal device in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal device, a computer having a wireless transceiver function, a virtual reality (virtual reality, VR) terminal device, an augmented reality (augmented reality, AR) terminal device, a smart home device (for example, a refrigerator, a television, an air conditioner, or an electricity meter), a smart robot, a robot arm, a workshop device, a wireless terminal device in self-driving, a wireless terminal device in industrial control (industrial control), a wireless terminal device in self-driving (self-driving), a wireless terminal device in telemedicine (remote medical), a wireless terminal device in a smart grid (smart grid), a wireless terminal device in transportation safety (transportation safety), a wireless terminal device in a smart city (smart city), a wireless terminal device in a smart home (smart home), a vehicle-mounted terminal device, a road side unit (road side unit, RSU) or the like having a terminal device function, a flight device (for example, a smart robot, a hot air balloon, an uncrewed aerial vehicle, or an airplane), or the like. The terminal device in this application may alternatively be a vehicle-mounted module, a vehicle-mounted assembly, a vehicle-mounted part, a vehicle-mounted chip, or a vehicle-mounted unit that is built in a vehicle as one or more parts or units. The terminal device may alternatively be another device having a terminal device function. For example, the terminal device may alternatively be a device that functions as a terminal device in D2D communication.

A form of the terminal device is not limited in embodiments of this application. An apparatus for implementing a function of the terminal device may be a terminal device, or may be an apparatus, for example, a chip system, that supports the terminal device in implementing the function. The apparatus may be mounted in the terminal device or used together with the terminal device. In embodiments of this application, the chip system may include a chip, or may include a chip and another discrete component.

In the communication system, when there is no random access resource set applicable to a feature of a current random access procedure, a first-type terminal device may determine a random access resource set based on a feature of a second-type terminal device. In other words, the first-type terminal device may serve as or fall back to the second-type terminal device, and then perform a random access resource set selection process. Therefore, an eRedCap terminal device and a RedCap terminal device can share a random access resource set of the RedCap terminal device, thereby improving random access resource utilization, and implementing flexible selection of a random access resource set.

It may be understood that FIG. 5 is a simplified diagram used as an example for ease of understanding. The communication system may further include another network device and/or another terminal device that are/is not shown in FIG. 5.

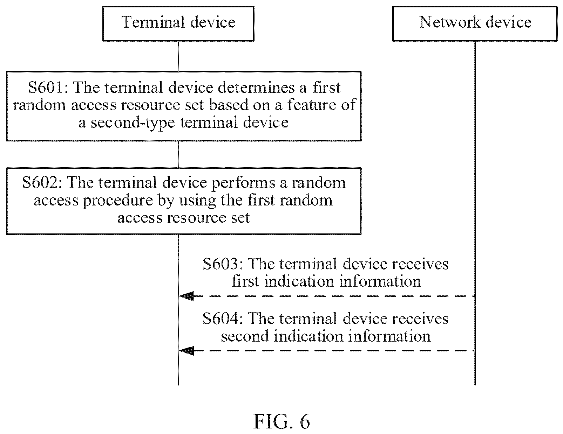

For ease of understanding, the following specifically describes the communication method provided in embodiments of this application with reference to FIG. 6 to FIG. 13.

For example, FIG. 6 is a schematic flowchart 1 of a communication method according to an embodiment of this application. The method is applicable to communication between a terminal device and a network device in the foregoing communication system.

Specifically, as shown in FIG. 6, a procedure of the communication method is as follows.

S601: When there is no random access resource set applicable to a feature of a current random access procedure, if the terminal device is a first-type terminal device, the terminal device determines a first random access resource set based on a feature of a second-type terminal device.

In a possible manner, the first-type terminal device first performs a random access resource set selection process based on a feature of the first-type terminal device or by serving as the first-type terminal device. If a result of the random access resource set selection process is that there is no random access resource set applicable to the feature of the current random access procedure, the first-type terminal device considers that the second-type terminal device is applicable to the current random access procedure, and performs the random access resource set selection process again.

That there is no random access resource set applicable to the feature of the current random access procedure may be understood as that there is no random access resource set applicable to any feature of the current RACH procedure, in other words, there is no random access resource set whose associated feature is a subset or a full set of the feature of the current RACH procedure.

The first-type terminal device may be a terminal device whose capability is reduced relative to that of the second-type terminal device. The first-type terminal device may be eRedCap UE, and the second-type terminal device may be RedCap UE. For specific descriptions, refer to related descriptions of the foregoing technical terms. Details are not described again. It may be understood that the eRedCap UE and the RedCap UE may also have other names. It may be understood that the first-type terminal device and the second-type terminal device may alternatively be any other possible terminal devices. This is not limited.

That the terminal device determines the first random access resource set based on the feature of the second-type terminal device may be understood as that the terminal device considers the terminal device itself as/serves as the second-type terminal device, and determines the first random access resource set, in other words, the terminal device considers that the feature of the second-type terminal device is applicable to the current random access procedure, and determines the first random access resource set. Optionally, that the terminal device determines the first random access resource set based on the feature of the second-type terminal device may also be understood as that the terminal device replaces the feature of the first-type terminal device with the feature of the second-type terminal device, considers that the feature of the second-type terminal device is applicable to the current random access procedure, and determines the first random access resource set. This is not limited.

That the terminal device determines the first random access resource set may be understood as that the terminal device performs the random access resource set selection process, and selects the first random access resource set. The terminal device considers the terminal device itself as/serves as the second-type terminal device, or considers that the feature of the second-type terminal device is applicable to the current random access procedure, and re-performs the random access resource set selection process. It may be understood that, for specific descriptions of the random access resource set selection process, reference may be made to FIG. 4. Details are not described herein again.

For example, if the terminal device is the eRedCap UE, in other words, the eRedCap UE is applicable to the current random access procedure, when there is no random access resource set applicable to the feature of the current random access procedure, the eRedCap UE does not select a random access resource set that meets the feature of the current random access procedure. In this case, the eRedCap UE may perform the RACH resource set selection process again based on a feature of the RedCap UE, by considering the eRedCap UE itself as/serving as the RedCap UE, by falling back to the RedCap UE, or by replacing a RedCapte feature with an eRedCap feature, to determine the first random access resource set.

The first random access resource set may be understood as a random access resource set available to the second-type terminal device, in other words, the first random access resource set may be a random access resource set configured by the network device for the second-type terminal device, in other words, an indication corresponding to the feature of the second-type terminal device in a feature combination field of the first random access resource set is set to true.

For example, the first random access resource set is a random access resource set available to the RedCap feature, in other words, the first random access resource set is a random access resource set allocated by the network device to the RedCap UE, in other words, redCap-r17 in the feature combination field of the first random access resource set is set to true. In other words, the eRedCap UE and the RedCap UE may share a random access resource set pre-allocated by the network device to the RedCap UE.

In a possible design solution, the feature of the current random access procedure may include at least one of the following: eRedCap UE, small data transmission, radio access network slicing, a coverage enhancement feature, or RedCap UE. For specific descriptions of the foregoing features, refer to related descriptions of the foregoing technical terms. Details are not described again. It may be understood that, when the terminal device is the eRedCap UE, the feature of the current random access procedure includes at least the eRedCap UE.

For example, four RACH resource sets configured by the network device and associated features are respectively: a RACH resource set #a1 (eRedCap+CovEnh), a RACH resource set #a2 (RedCap+SDT), a RACH resource set #a3 (CovEnh), and a RACH resource set #a4 (CovEnh+slicing). If features that trigger a current RACH procedure #4 are eRedCap+SDT, when the eRedCap UE selects a random access resource set, there is no RACH resource set applicable to eRedCap+SDT in the four configured RACH resource sets, and the eRedCap UE may consider the eRedCap UE itself as/serve as the RedCap UE, or fall back to the RedCap UE. In this case, eRedCap in features that trigger the current RACH procedure may be replaced with RedCap, in other words, the features that trigger the current RACH procedure #4 change to RedCap+SDT. In this case, the terminal device performs the RACH resource selection process again, and the eRedCap UE may select the RACH resource set #a2 (that is, the first random access resource set) to perform subsequent random access.

It should be noted that the first-type terminal device may be replaced with a first feature, the second-type terminal device may be replaced with a second feature, and that the terminal device is the first-type terminal device may also be replaced with that the first feature is applicable to the current random access procedure. That the terminal device determines the first random access resource set based on the feature of the second-type terminal device may be replaced with that the terminal device determines the first random access resource set based on the second feature. In other words, the solution in this embodiment of this application may be replaced as follows: When there is no random access resource set applicable to the feature of the current random access procedure, if the first feature is applicable to the current random access procedure, the terminal device determines the first random access resource set based on the second feature. The terminal device performs the random access procedure by using the first random access resource set. In this implementation, the first feature and the second feature are not limited to the first-type terminal device and the second-type terminal device, and may be any other possible features. Optionally, the first feature and the second feature may be in an evolutionary relationship. For example, the first feature is an enhancement of the second feature.

S602: The terminal device performs the random access procedure by using the first random access resource set.

It may be understood that for a specific implementation in which the terminal device performs the random access procedure by using the first random access resource set, reference may be made to related descriptions in S305 to S307. Details are not described again.

In conclusion, when there is no random access resource set applicable to the feature of the current random access procedure, the first-type terminal device may perform the random access resource set selection process based on the feature of the second-type terminal device, and determine a random access resource set. In other words, the first-type terminal device may serve as or fall back to the second-type terminal device, and then perform the random access resource set selection process. In this way, an eRedCap terminal device and a RedCap terminal device can share a random access resource set of the RedCap terminal device, thereby improving random access resource utilization, and implementing flexible selection of a random access resource set.

With reference to the foregoing embodiment, optionally, the method may further include the following step.

S603: The network device sends first indication information. The terminal device receives the first indication information.

The first indication information may indicate that the first-type terminal device is allowed to determine the first random access resource set based on the feature of the second-type terminal device. In other words, the first indication information may indicate that the first-type terminal device is allowed to determine the first random access resource set based on the feature of the second-type terminal device when there is no random access resource set applicable to the feature of the current random access procedure.

In other words, when there is no random access resource set applicable to any feature of the current random access procedure, and the first indication information indicates that the first-type terminal device is allowed to serve as the second-type terminal device to select a random access resource set, the terminal device may determine the first random access resource set based on the feature of the second-type terminal device.

For example, the eRedCap UE may determine the first random access resource set based on the feature of the RedCap UE only when there is no RACH resource applicable to the current RACH procedure and the network device indicates that the eRedCap UE is allowed to select a RACH resource set based on the feature of the RedCap UE. In other words, the eRedCap UE may determine the first random access resource set by replacing the eRedCap feature with the RedCap feature only when the eRedCap UE has no available RACH resource and the network device indicates that the eRedCap UE is allowed to select a RACH resource set based on the feature of the RedCap UE. In other words, the eRedCap UE may determine the first random access resource set based on the feature of the RedCap UE only when there is no RACH resource applicable to the current RACH procedure and the network device indicates that the eRedCap UE is allowed to serve as/be considered as the RedCap UE. In other words, the eRedCap UE may determine the first random access resource set based on the feature of the RedCap UE only when the eRedCap UE has no available RACH resource and the network device indicates that the eRedCap UE is allowed to fall back to the RedCap UE. This can enhance control of the network device over use of the RACH resource set by the eRedCap UE, and implement flexible configuration of the RACH resource set.

The first indication information may further indicate that the first-type terminal device is not allowed to determine the first random access resource set based on the feature of the second-type terminal device. In this case, the first-type terminal device selects a random access resource set that is not associated with any feature. For example, in this case, the eRedCap UE cannot determine the first random access resource set based on the feature of the RedCap UE, and the eRedCap UE may select a random access resource set that has no associated feature.

It may be understood that a name of the first indication information is merely an example, and the first indication information may also be referred to as indication information #1, indication information #a, or the like. This is not limited.

Optionally, the method may further include the following step.

S604: The network device sends second indication information. The terminal device receives the second indication information.

The second indication information may indicate that the first-type terminal device is allowed to use a second random access resource set, and the second random access resource set is a random access resource set that is allowed to be used by the first-type terminal device.

For example, the second indication information may indicate that the eRedCap UE is allowed to use the second random access resource set, and the second random access resource set is related to the RedCap UE. In other words, a feature associated with the second random access resource set may include the RedCap UE, or the second random access resource set is a random access resource set configured by the network device for the RedCap UE to use.

The second indication information may be configured specifically for the second random access resource set, in other words, the second indication information indicates that the first-type terminal device is allowed to use the specific second random access resource set. The second indication information may indicate whether each second random access resource set (an indication at a granularity of per second random access resource set) is allowed to be used by the first-type terminal. In other words, the network device may indicate, by using at least one piece of second indication information, whether at least one second random access resource set is allowed to be used by the eRedCap UE.

For example, random access resource sets related to the RedCap UE are denoted as to-be-selected random access resource sets, and the to-be-selected random access resource sets may include a RACH resource set #b1, a RACH resource set #b2, a RACH resource set #b3, and a RACH resource set #b4. The network device may indicate, by using indication information #b1, that the RACH resource set #b1 is not allowed to be used by the eRedCap UE; indicate, by using indication information #b2, that the RACH resource set #b2 is allowed to be used by the eRedCap UE; indicate, by using indication information #b3, that the RACH resource set #b3 is allowed to be used by the eRedCap UE; and indicate, by using indication information #b4, that the RACH resource set #b4 is not allowed to be used by the eRedCap UE. In this case, the second random access resource set may be the RACH resource set #b2 or the RACH resource set #b3.

It may be understood that the indication information #b1, the indication information #b2, the indication information #b3, and the indication information #b4 may be same information, that is, the network device may indicate a plurality of to-be-selected random access resource sets by using one piece of indication information. Alternatively, the indication information #b1, the indication information #b2, the indication information #b3, and the indication information #b4 may be different information, that is, each to-be-selected random access resource set corresponds to one piece of indication information. This is not limited.

When there is no random access resource set applicable to the feature of the current random access procedure, if the terminal device is the first-type terminal device, the terminal device performs a random access resource set selection process based on the feature of the second-type terminal device, and determines the first random access resource set from the second random access resource set that is indicated by the second indication information and that is allowed to be used by the second-type terminal device.

It may be understood that the first random access resource set is one of the second random access resource set that is allowed to be used by the eRedCap UE. In other words, the eRedCap UE selects, in the RACH resource set selection process from one or more second random access resource sets that are allowed to be used by the eRedCap UE, a random access resource set that meets the feature of the current random access procedure, where the random access resource set is the first random access resource set. For example, the first random access resource set may be a RACH resource set that is in the RACH resource set #b2 and the RACH resource set #b3 and that is applicable to the current random access procedure.

If the network device indicates, by using the second indication information, that each second random access resource set does not allow the second random access resource set, the terminal device selects a random access resource set that has no associated feature.

In this way, the network device may clearly determine, in a random access resource set associated with the RedCap UE, a random access resource set that can be used by the eRedCap UE. In other words, the network device may determine which random access resource is a random access resource set shared by the eRedCap UE and the RedCap UE. Therefore, the network device may perform corresponding scheduling and identification based on whether a random access resource set used by a received preamble is a shared access resource set, enhancing control of the network device over a RACH resource set used by the eRedCap UE. It may be understood that a name of the second indication information is merely an example, and the second indication information may also be referred to as indication information #2a, indication information #2b, or the like. This is not limited.

Optionally, the method may further include:
When there is no random access resource set applicable to the feature of the current random access procedure, if the terminal device is not the first-type terminal device, the terminal device selects a random access resource set that has no associated feature, to perform the random access procedure.

In other words, a case in which the terminal device is not the eRedCap UE and there is no random access resource set applicable to the feature of the current random access procedure is applicable to the feature of the current random access procedure, and the terminal device directly selects the random access resource set that has no associated feature. For example, the terminal device is the RedCap UE. In this case, if there is no random access resource set applicable to the feature that triggers the current RACH procedure, the RedCap UE selects the random access resource set that has no associated feature.

It may be understood that, according to the foregoing steps S603 and S604, when there is no random access resource set applicable to the feature of the current random access procedure, if the terminal device is the eRedCap UE and at least one of the following conditions is met, the terminal device may directly select the random access resource set that has no associated feature, to perform the random access procedure.

The at least one of the following conditions may include: The first indication information indicates that the first-type terminal device is not allowed to determine the first random access resource set based on the feature of the second-type terminal device; or the second indication information indicates that the eRedCap UE is not allowed to use the second random access resource set. For example, if the eRedCap UE does not select the random access resource set applicable to the feature of the current random access procedure, and the network device indicates, by using the first indication information, that the eRedCap UE is not allowed to determine the first random access resource set based on the feature of the RedCap UE, the eRedCap UE directly selects the random access resource set that has no associated feature.

For another example, the foregoing to-be-selected random access resource sets are still used. If the network device indicates, by using indication information #c1, that the RACH resource set #b1 is not allowed to be used by the eRedCap UE; indicates, by using indication information #c2, that the RACH resource set #b2 is not allowed to be used by the eRedCap UE; indicates, by using indication information #c3, that the RACH resource set #b3 is not allowed to be used by the eRedCap UE; and indicates, by using indication information #c4, that the RACH resource set #b4 is not allowed to be used by the eRedCap UE, random access resource sets associated with the RedCap UE are not allowed to be used by the eRedCap UE. In this case, the eRedCap UE directly selects the random access resource set that has no associated feature, to perform the subsequent random access procedure.

Optionally, the method may further include:
The terminal device determines, based on an indication associated with a random access resource set and the feature of the current random access procedure, whether the random access resource set is applicable to the current random access procedure.

The indication associated with the random access resource set may represent a feature associated with the random access resource set, and the feature associated with the random access resource set may be indicated by using each parameter in a corresponding feature combination field. The terminal device may determine, based on whether the feature associated with the random access resource set is a full set or a subset of the feature of the current random access procedure, whether the random access resource set is applicable to the current random access procedure. For specific descriptions, refer to related descriptions of the foregoing technical terms. Details are not described again.

For example, the four RACH resource sets in the foregoing embodiment, that is, the RACH resource set #a1 (eRedCap+CovEnh), the RACH resource set #a2 (RedCap+SDT), the RACH resource set #a3 (CovEnh), and the RACH resource set #a4 (CovEnh+slicing), are still used. If the feature of the current random access procedure is eRedCap+CovEnh, the RACH resource set #a1 and the RACH resource set #a3 are applicable to the current random access procedure. If the feature of the current random access procedure is eRedCap+CovEnh+slicing, the RACH resource set #a1, the RACH resource set #a3, and the RACH resource set #a4 are applicable to the current random access procedure. If the feature of the current random access procedure is eRedCap+SDT+CovEnh, the RACH resource set #a1 and the RACH resource set #a3 are applicable to the RACH resource set of the current random access procedure.

Optionally, the method may further include:
If the terminal device is the first-type terminal device, and a random access resource set corresponding to a bandwidth part BWP selected by the terminal device includes only a two-step random access resource set, the terminal device determines the first random access resource set based on the feature of the second-type terminal device.

It may be understood that the terminal device needs to first perform a BWP selection operation before performing RACH resource set selection. It can be learned from the descriptions of the foregoing technical terms that, in the two-step random access procedure, the network device cannot configure a dedicated RACH resource set for the eRedCap UE. In this case, if the random access resource set corresponding to the BWP selected by the terminal device includes only the two-step random access resource set, the eRedCap UE may directly determine the first random access resource set based on the feature of the RedCap UE, that is, the eRedCap UE may directly consider the eRedCap UE itself as/serve as the RedCap UE to perform the RACH resource set selection process.

It may be understood that, compared with step S601, in this step, the UE does not need to first perform the RACH resource set selection process based on an identity of the eRedCap UE, and the eRedCap UE may directly perform the RACH resource set selection process as the eRedCap UE, thereby improving random access resource utilization, and implementing flexible selection of a random access resource set.

If the terminal device is the eRedCap UE, and the random access resource set corresponding to the selected BWP does not include only the two-step random access resource set, for example, the random access resource set corresponding to the BWP selected by the terminal device includes a two-step random access resource set and a four-step random access resource set, or includes only a four-step random access resource set, the terminal device still first performs the RACH resource set selection process based on the identity of the eRedCap UE, and when there is no random access resource set applicable to the feature of the current random access procedure, the eRedCap UE determines the first random access resource set according to step S601.

For example, the four RACH resource sets in the foregoing embodiment, that is, the RACH resource set #a1 (eRedCap+CovEnh), the RACH resource set #a2 (RedCap+SDT), the RACH resource set #a3 (CovEnh), and the RACH resource set #a4 (CovEnh+slicing), are still used. If the feature of the current RACH procedure is eRedCap+SDT, and the random access resource set corresponding to the selected BWP includes only the two-step random access resource set, the eRedCap UE considers the eRedCap UE itself as the RedCap UE and performs the RACH resource set selection process. In this case, the feature of the current RACH procedure may be considered as RedCap+SDT.

The UE determines whether any feature applicable to RedCap+SDT exists in the four RACH resource sets. In this case, the RACH resource set #a2 can meet all features of the current RACH procedure, and the UE directly selects the RACH resource set #a2 to perform the subsequent random access procedure.

With reference to the method embodiment, the foregoing describes the overall procedure of the communication method provided in embodiments of this application. For ease of understanding, the following describes the foregoing method by using two specific scenarios.

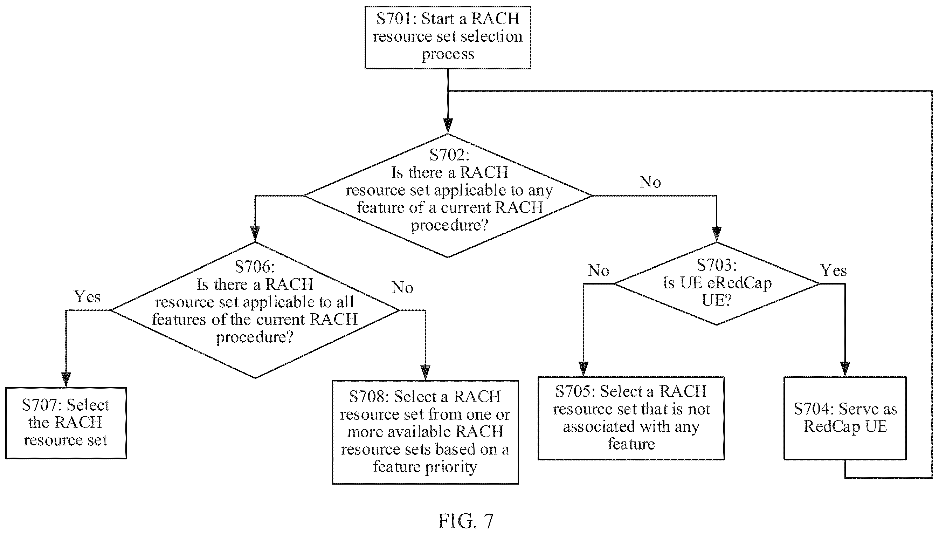

Scenario 1: As shown in FIG. 7, the method may include the following steps.

S701: UE starts to perform a RACH resource set selection process.

S702: The UE determines whether there is a RACH resource set applicable to any feature of a current RACH procedure.

The feature of the current RACH procedure may include at least one of the following: RedCap, eRedCap, SDT, CovEnh, or RAN slicing.

The UE needs to perform determining for each four-step RACH resource set and each two-step RACH resource set that are configured by a network. If redCap-17 of a RACH resource is set to true, it indicates that the RACH resource set cannot be used in a RACH procedure to which the RedCap feature is not applicable. If eRedCap of a RACH resource is set to true, it indicates that the RACH resource set cannot be used in a RACH procedure to which the eRedCap feature is not applicable. If smallData-17 of a RACH resource is set to true, it indicates that the RACH resource set cannot be used in a RACH procedure to which RACH-based SDT is not applicable. If a RACH resource is configured with an associated slice list, it indicates that the RACH resource set cannot be used in a RACH procedure triggered by a slice that is not in the slice list. If msg3-Repetitions of a RACH resource is set to true, it indicates that the RACH resource set cannot be used in a RACH procedure to which Msg3 repetition is not applicable. The UE determines, by using a feature combination field associated with each RACH resource set, whether there is a RACH resource set applicable to any feature of the current RACH procedure.

It may be understood that step S702 may include a case a and a case b, which are specifically described below.

Case a: If there is no RACH resource set applicable to any feature of the current RACH procedure, perform S703: determining whether the UE is eRedCap UE.

It may be understood that step S703 may include a case a1 and a case a2, which are specifically described below.

Case a1: If the UE is the eRedCap UE, perform S704: The eRedCap UE serves as RedCap UE, and then performs a RACH resource set selection process, that is, the eRedCap UE performs step S702 again as the RedCap UE.

It may be understood that that the UE is the eRedCap UE may be understood as that the UE is the eRedCap UE, and the first indication information indicates that the eRedCap UE is allowed to serve as/be considered as the RedCap UE. Optionally, when the eRedCap UE performs step S702 as the RedCap UE, if a network device indicates, by using second indication information, that a first-type terminal device is allowed to use a second random access resource set, the eRedCap UE may select a random access resource set from the second random access resource set that is indicated by the second indication information and that is allowed to be used by the eRedCap UE.

If the network device indicates, by using the first indication information, that the eRedCap UE is not allowed to serve as/be considered as the RedCap UE, or indicates, by using the second indication information, that the first-type terminal device is not allowed to use the second random access resource set, the eRedCap UE selects a RACH resource set that is not associated with any feature.

Case a2: If the UE is not the eRedCap UE, perform S705: The UE selects a RACH resource set that is not associated with any feature.

It may be understood that that the UE is not the eRedCap UE may be understood as that the UE is not the eRedCap UE, or first indication information indicates that the eRedCap UE is not allowed to serve as/be considered as RedCap UE, or second indication information indicates that the eRedCap UE cannot use a second random access resource set.

Case b: If there is a RACH resource set applicable to any feature of the current RACH procedure, perform S706: The UE determines whether there is a RACH resource set applicable to all features of the current RACH resource set.

It may be understood that step S706 may include a case b1 and a case b2, which are specifically described below.

Case b1: If there is a RACH resource set applicable to all the features of the current RACH procedure, perform S707: The UE selects the RACH resource set.

Case b2: If there is no RACH resource set applicable to all the features of the current RACH procedure, perform S708: The UE performs selection from one or more available RACH resource sets based on a feature priority. For specific descriptions, refer to related descriptions in the foregoing technical term part. Details are not described again.

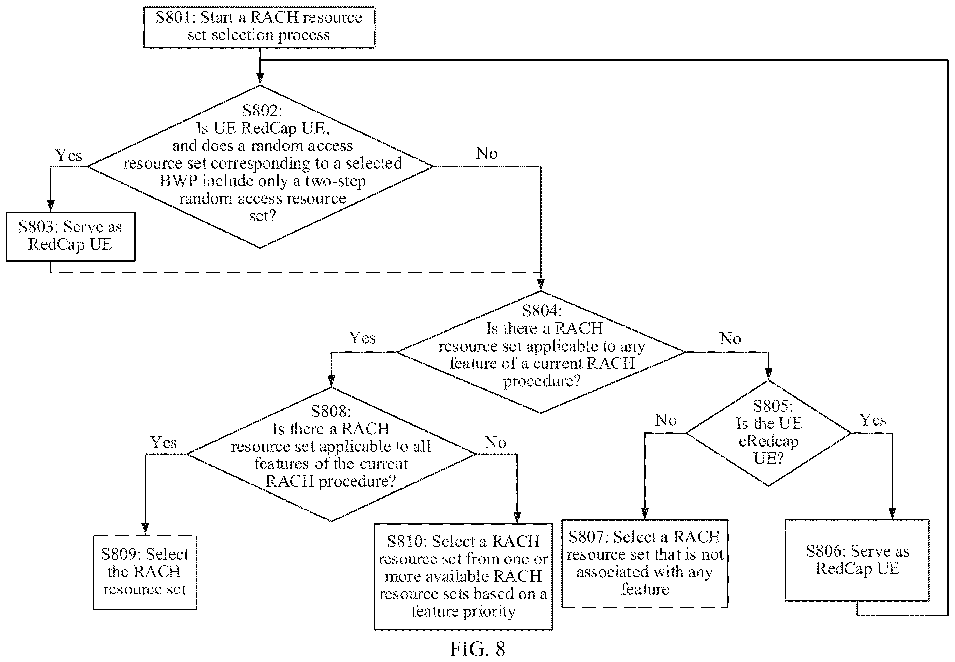

Scenario 2: As shown in FIG. 8, the method may include the following steps.

S801: UE starts to perform a RACH resource set selection process.

S802: The UE determines whether the UE is RedCap UE, and whether a random access resource set corresponding to a selected BWP includes only a two-step random access resource set.

It may be understood that step S802 may include a case c and a case d, which are specifically described below.

Case c: If the UE is the eRedCap UE, and the random access resource set corresponding to the selected BWP includes only the two-step random access resource set, perform S803: The UE serves as RedCap UE, and performs S804: The UE determines whether there is a RACH resource set applicable to any feature of a current RACH procedure.

Case d: If the UE is not the eRedCap UE, or the random access resource set corresponding to the selected BWP does not include only the two-step random access resource set, perform S804: The UE determines whether there is a RACH resource set applicable to any feature of a current RACH procedure.

It may be understood that step S804 may include a case e and a case f, which are specifically described below.

Case e: If there is no RACH resource set applicable to any feature of the current RACH procedure, perform S805: determining whether the UE is eRedCap UE.

It may be understood that step S805 may include a case e1 and a case e2, which are specifically described below.

Case e1: If the UE is the eRedCap UE, perform S806: The eRedCap UE serves as the RedCap UE, and then performs a RACH resource set selection process, that is, the eRedCap UE performs step S802 again as the RedCap UE.

Case e2: If the UE is not the eRedCap UE, perform S807: The UE selects a RACH resource set that is not associated with any feature.

Case f: If there is a RACH resource set applicable to any feature of the current RACH procedure, perform S808: The UE determines whether there is a RACH resource set applicable to all features of the current RACH resource set.

It may be understood that step S808 may include a case f1 and a case f2, which are specifically described below.

Case f1: If there is a RACH resource set applicable to all the features of the current RACH procedure, perform S809: The UE selects the RACH resource set.

Case f2: If there is no RACH resource set applicable to all the features of the current RACH procedure, perform S810: The UE performs selection from one or more available RACH resource sets based on a feature priority.

It may be understood that, in the case c, when the UE performs step S804, if the UE determines that there is no RACH resource set applicable to any feature of the current RACH procedure, the UE directly performs S807, that is, the UE selects a RACH resource set that is not associated with any feature. For specific descriptions, refer to related descriptions in the foregoing technical term part. Details are not described again. It should be understood that a specific implementation process of steps S804 to S810 is similar to that of steps S702 to S708. Reference may be made for understanding, and details are not described again.

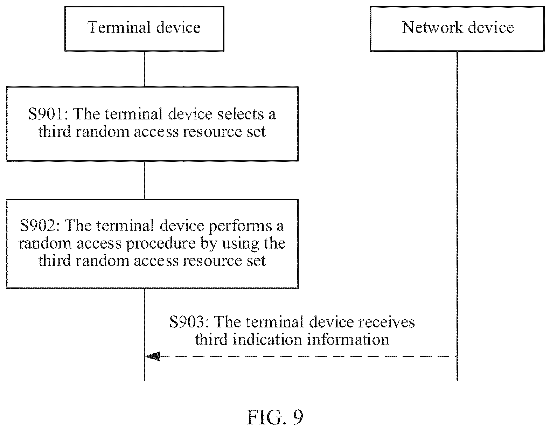

For example, FIG. 9 is a schematic flowchart 4 of a communication method according to an embodiment of this application. The method is applicable to communication between a terminal device and a network device in the foregoing communication system.

Specifically, as shown in FIG. 9, a procedure of the communication method is as follows.

S901: When there is no random access resource set applicable to a feature of a current random access procedure, if the terminal device is a first-type terminal device and there is a third random access resource set, the terminal device selects the third random access resource set.

For the case in which there is no random access resource set applicable to the feature of the current random access procedure, refer to related descriptions in step S601. Details are not described again.

The first-type terminal device may be a terminal device whose capability is reduced relative to that of a second-type terminal device. The first-type terminal device may be eRedCap UE, and the second-type terminal device may be RedCap UE. For specific descriptions, refer to related descriptions of the foregoing technical terms. Details are not described again. It may be understood that the first-type terminal device and the second-type terminal device may alternatively be any other possible terminal devices. This is not limited.

The third random access resource set may be associated with only an indication of the second-type terminal, and the indication of the second-type terminal may represent that a non-second-type terminal device cannot use the random access resource set in a random access procedure, or the indication of the second-type terminal may indicate that a feature of the second-type terminal is a part of a feature combination associated with the random access resource set. The third random access resource set is not associated with an indication of another feature other than the indication of the second-type terminal.

For example, the third random access resource set is associated with only a RedCap feature, in other words, only RedCap-r17 in a feature combination field corresponding to the third random access resource set is set to true, or only RedCap-r17 is configured for the third random access resource set, and the third random access resource set may be denoted as a RedCap-only (RedCap-only) random access resource set.

When the eRedCap UE does not select a random access resource set applicable to the feature of the current random access procedure, if the network device configures a RedCap-only RACH resource set, the eRedCap UE may directly use the RedCap-only RACH resource set.

In a possible design solution, the feature of the current random access procedure may include at least one of the following: eRedCap UE, small data transmission, radio access network slicing, a coverage enhancement feature, or RedCap UE. For specific descriptions of the foregoing features, refer to related descriptions of the foregoing technical terms. Details are not described again. It may be understood that, when the terminal device is the eRedCap UE, the feature of the current random access procedure includes at least the eRedCap UE.

For example, four RACH resource sets configured by the network device and associated features are respectively: a RACH resource set #c1 (eRedCap+CovEnh), a RACH resource set #c2 (RedCap), a RACH resource set #c3 (eRedCap+CovEnh+slicing), and a RACH resource set #c4 (CovEnh+SDT). If the feature of the current RACH procedure is eRedCap+SDT, the four RACH resource sets do not include a RACH resource set applicable to eRedCap+SDT, and the RACH resource set #c2 is a RACH resource set associated with only the indication of the second-type terminal. In this case, the eRedCap UE may select the RACH resource set #c2 (that is, the third random access resource set), to perform subsequent random access.

It should be noted that the first-type terminal device may be replaced with a first feature, the second-type terminal device may be replaced with a second feature, and that the terminal device is the first-type terminal device may also be replaced with that the first feature is applicable to the current random access procedure. That the terminal device determines a first random access resource set based on the feature of the second-type terminal device may be replaced with that the terminal device determines the first random access resource set based on the second feature. In other words, the solution in this embodiment of this application may be replaced as follows: When there is no random access resource set applicable to the feature of the current random access procedure, if the first feature is applicable to the current random access procedure, the terminal device determines the first random access resource set based on the second feature. The terminal device performs the random access procedure by using the first random access resource set. In this implementation, the first feature and the second feature are not limited to the first-type terminal device and the second-type terminal device, and may be any other possible features. Optionally, the first feature and the second feature may be in an evolutionary relationship. For example, the first feature is an enhancement of the second feature.

S902: The terminal device performs the random access procedure by using the third random access resource set.

It may be understood that for a specific implementation in which the terminal device performs the random access procedure by using the RedCap-only RACH resource set, reference may be made to related descriptions in S305 to S307. Details are not described again.

In conclusion, when there is no random access resource set applicable to the feature of the current random access procedure, if the network device configures a random access resource set, for example, the third random access resource set, that is associated with only the indication of the second-type terminal, the first-type terminal device may directly use the third random access resource set to perform the random access procedure. In this way, an eRedCap terminal device and a RedCap terminal device can share a random access resource set of the RedCap terminal device, thereby improving random access resource utilization can be improved, and implementing flexible selection of a random access resource set. In addition, the network device may clearly determine which access resource sets are random access resource sets shared by the eRedCap terminal device and the RedCap terminal device, enhancing control of the network device over a random access resource set used by the first-type terminal device.

With reference to the foregoing embodiment, optionally, the method may further include the following step.

S903: The network device sends third indication information. The terminal device receives the third indication information.

The third indication information may indicate that the first-type terminal is allowed to use the third random access resource set, or the third indication information indicates that the first-type terminal is allowed to use the third random access resource set when there is no random access resource set applicable to the feature of the current random access procedure.

For example, when there is no RACH resource set applicable to any feature of the current RACH procedure, and there is a RedCap-only RACH resource set, the eRedCap UE may select the RedCap-only RACH resource set only when the network device indicates that the eRedCap UE is allowed to use the RedCap-only RACH resource set. In this way, the network device may determine that the eRedCap UE can use only the RedCap-only random access resource set, in other words, the network device may determine that the RedCap-only random access resource is a random access resource set shared by the eRedCap UE and the RedCap UE. Therefore, the network device may perform corresponding scheduling and identification based on whether a random access resource set used by a received preamble is a shared access resource set, enhancing control of the network device over a RACH resource set used by the eRedCap UE.

The third indication information may alternatively indicate that the first-type terminal is not allowed to use the third random access resource set. In this case, the eRedCap UE cannot use the RedCap-only RACH resource set, and the eRedCap UE may select a random access resource set that has no associated feature.

It may be understood that a name of the third indication information is merely an example, and the third indication information may also be referred to as indication information #3, indication information #c, or the like. This is not limited.

Optionally, the method may further include:

When there is no random access resource set applicable to the feature of the current random access procedure and a first condition is met, the terminal device selects a random access resource set that has no associated feature, to perform the random access procedure.

The first condition may include at least one of the following:
The terminal device is not the first-type terminal device; or there is no random access resource set configured with only the indication of the second-type terminal.

In other words, when the terminal device is not the eRedCap UE, and there is no random access resource set applicable to the feature of the current random access procedure, the terminal device selects the random access resource set that has no associated feature. For example, the terminal device is the RedCap UE. In this case, there is no random access resource set applicable to the current random access procedure, and the RedCap UE selects the random access resource set that has no associated feature.

Alternatively, the terminal device is the eRedCap UE, and there is no random access resource set applicable to the feature of the current random access procedure, but the network device does not configure the RedCap-only random access resource set. In this case, the eRedCap UE selects the random access resource set that has no associated feature.

Optionally, the first condition may further include: The third indication information indicates that the eRedCap UE is not allowed to use the RedCap-only random access resource set. In this case, the terminal device is the eRedCap UE, and the network device configures the RedCap-only random access resource set, but the network device indicates, by using the third indication information, that the eRedCap UE is not allowed to use the RedCap-only random access resource set. In this case, the eRedCap UE also needs to select the random access resource set that has no associated feature.

Optionally, the method may further include: The terminal device determines, based on an indication associated with a random access resource set and the feature of the current random access procedure, whether the random access resource set is applicable to the current random access procedure.

The indication associated with the random access resource set represents a feature associated with the random access resource set.

For an implementation process of this step, refer to related descriptions in the method shown in FIG. 6. Details are not described again.

Optionally, the method may further include: If the terminal device is the first-type terminal device, a RACH resource set corresponding to a bandwidth part BWP selected by the terminal device includes only a two-step RACH resource set, and there is the third random access resource set, the terminal device selects the third random access resource set.

It may be understood that the terminal device needs to first perform a BWP selection operation before performing RACH resource set selection. It can be learned from the descriptions of the foregoing technical terms that, in the two-step random access procedure, the network device cannot configure a dedicated RACH resource set for the eRedCap UE. In this case, if the random access resource set corresponding to the BWP selected by the terminal device includes only the two-step random access resource set, and the RedCap-only RACH resource set is configured, the eRedCap UE may directly select the RedCap-only RACH resource set.

It may be understood that, compared with step S901, in this step, the UE does not need to first perform the RACH resource set selection process based on an identity of the eRedCap UE, and the eRedCap UE may directly use the RedCap-only RACH resource set to perform random access, thereby improving random access resource utilization, and implementing flexible selection of a random access resource set.

With reference to the method embodiment, the foregoing describes the overall procedure of the communication method provided in embodiments of this application. For ease of understanding, the following describes the foregoing method by using two specific scenarios.

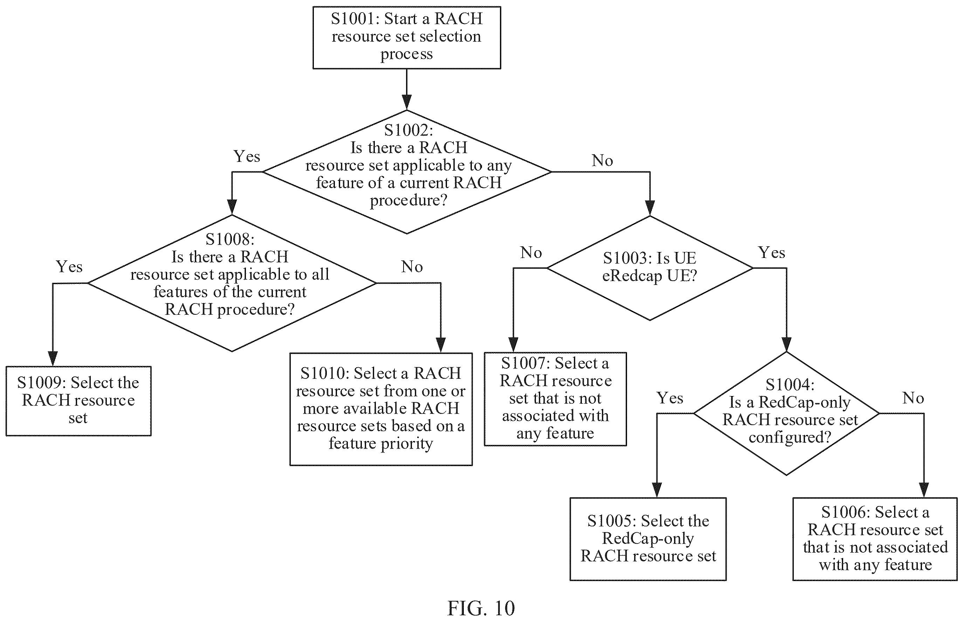

Scenario 3: As shown in FIG. 10, the method may include the following steps.

S1001: UE starts to perform a RACH resource set selection process.

S1002: The UE determines whether there is a RACH resource set applicable to any feature of a current RACH procedure.

It may be understood that step S1002 may include a case g and a case h, which are specifically described below.

Case g: If there is no RACH resource set applicable to any feature of the current RACH procedure, perform S1003: determining whether the UE is eRedCap UE.

It may be understood that step S1003 may include a case i and a case j, which are specifically described below.

Case i: If the UE is the eRedCap UE, perform S1004: The UE determines whether a RedCap-only RACH resource set is configured.

It may be understood that step S1004 may include a case i1 and a case i2, which are specifically described below.

Case il: If the RedCap-only RACH resource set is configured, perform S1005: The UE selects the configured RedCap-only RACH resource set.

It may be understood that, that the UE selects the configured RedCap-only RACH resource set may be understood as follows: When a network device indicates, by using third indication information, that a first-type terminal is allowed to use a third random access resource set, the UE selects the configured RedCap-only RACH resource set. If the RedCap-only RACH resource set is configured, and the third indication information indicates that the first-type terminal is not allowed to use the third random access resource set, the UE selects a RACH resource set that does not have any associated feature.

Case i2: If the RedCap-only RACH resource set is not configured, perform S1006: The UE selects a RACH resource set that does not have any associated feature.

Case j: If the UE is not the eRedCap UE, perform S1007: The UE selects a RACH resource set that is not associated with any feature.

Case h: If there is a RACH resource set applicable to any feature of the current RACH procedure, perform S1008: The UE determines whether there is a RACH resource set applicable to all features of the current RACH resource set.

It may be understood that step S1008 may include a case h1 and a case h2, which are specifically described below.

Case h1: If there is a RACH resource set applicable to all the features of the current RACH procedure, perform S1009: The UE selects the RACH resource set.

Case h2: If there is no RACH resource set applicable to all the features of the current RACH procedure, perform S1010: The UE performs selection from one or more available RACH resource sets based on a feature priority.

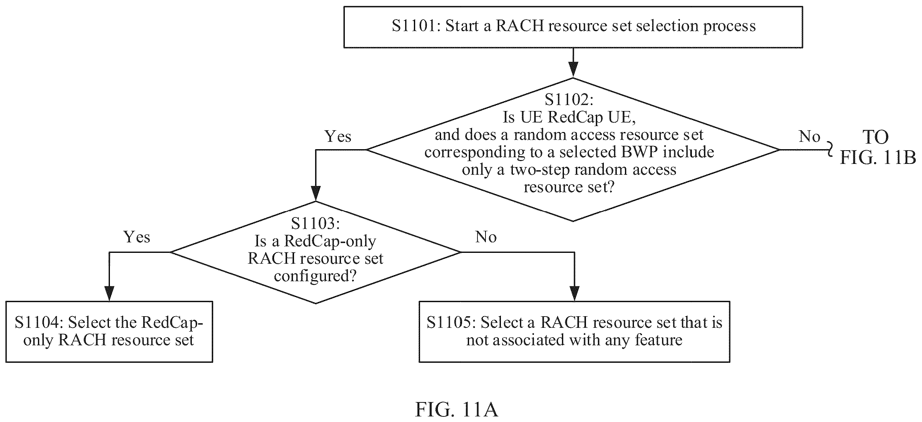

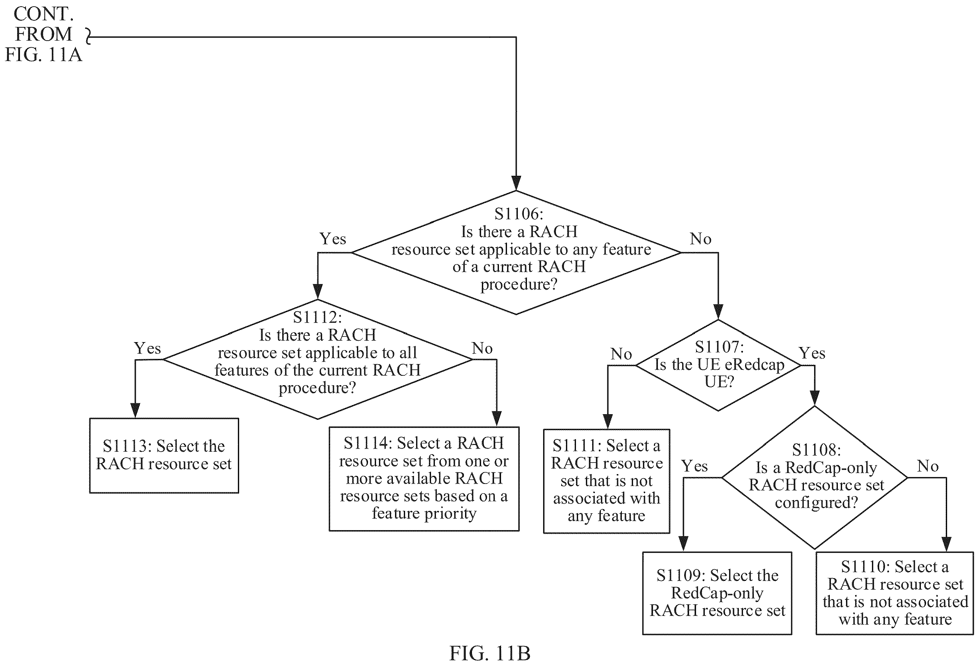

Scenario 4: As shown in FIG. 11A and FIG. 11B, the method may include the following steps.

S1101: UE starts to perform a RACH resource set selection process.

S1102: Determine whether the UE is eRedCap UE, and whether a random access resource set corresponding to a selected BWP includes only a two-step random access resource set.

It may be understood that step S1102 may include a case k and a case 1, which are specifically described below.

Case k: If the UE is the eRedCap UE, and the random access resource set corresponding to the selected BWP includes only the two-step random access resource set, perform S1103: The UE determines whether a RedCap-only RACH resource set is configured.

It may be understood that step S1103 may include a case k1 and a case k2, which are specifically described below.

Case k1: If the RedCap-only RACH resource set is configured, perform S1104: The UE selects the configured RedCap-only RACH resource set.

Case k2: If the RedCap-only RACH resource set is not configured, perform S1105: The UE selects a RACH resource set that is not associated with any feature.

Case 1: If the UE is not the eRedCap UE, or the random access resource set corresponding to the selected BWP does not include only the two-step random access resource set, perform S1106: The UE determines whether there is a RACH resource set applicable to any feature of a current RACH procedure.

It may be understood that step S1106 may include a case m and a case n, which are specifically described below.

Case m: If there is no RACH resource set applicable to any feature of the current RACH procedure, perform S1107: determining whether the UE is eRedCap UE.

It may be understood that step S1107 may include a case o and a case p, which are specifically described below.

Case o: If the UE is the eRedCap UE, perform S1108: The UE determines whether a RedCap-only RACH resource set is configured.

It may be understood that step S1108 may include a case o1 and a case o2, which are specifically described below.

Case o1: If the RedCap-only RACH resource set is configured, perform S1109: The UE selects the configured RedCap-only RACH resource set.

Case o2: If the RedCap-only RACH resource set is not configured, perform S1110: The UE selects a RACH resource set that is not associated with any feature.

Case p: If the UE is not the eRedCap UE, perform S1111: The UE selects a RACH resource set that is not associated with any feature.

Case n: If there is a RACH resource set applicable to any feature of the current RACH procedure, perform S1112: The UE determines whether there is a RACH resource set applicable to all features of the current RACH resource set.

It may be understood that step S1112 may include a case n1 and a case n2, which are specifically described below.

Case n1: If there is a RACH resource set applicable to all the features of the current RACH procedure, perform S1113: The UE selects the RACH resource set.

Case n2: If there is no RACH resource set applicable to all the features of the current RACH procedure, perform S1114: The UE performs selection from one or more available RACH resource sets based on a feature priority.

It should be understood that a specific implementation process of steps S1106 to S1114 is similar to that of steps S1002 to S1010. Reference may be made for understanding, and details are not described again.

Currently, a method for implementing random access resource sharing is as follows: If a random access resource set is associated with a feature of a first-type terminal device, it may be considered that the random access resource set is applicable to random access procedures associated with the feature of the first-type terminal device and/or a feature of a second-type terminal device. However, it is not enough to change only availability of the random access resource set. If the first-type terminal device does not consider the feature of the second-type terminal device available in a random access resource set selection process, the first-type terminal device cannot perform random access resource set screening or identification based on the feature of the second-type terminal device. However, if the first-type terminal device considers the feature of the second-type terminal device applicable when or before starting the random access resource set selection process, the first-type terminal device cannot identify a random access resource set that meets all features that trigger a current random access procedure. This is because one random access resource set is not applicable to both the feature of the first-type terminal and the feature of the second-type terminal. To resolve the foregoing problem, this application provides the following embodiment.

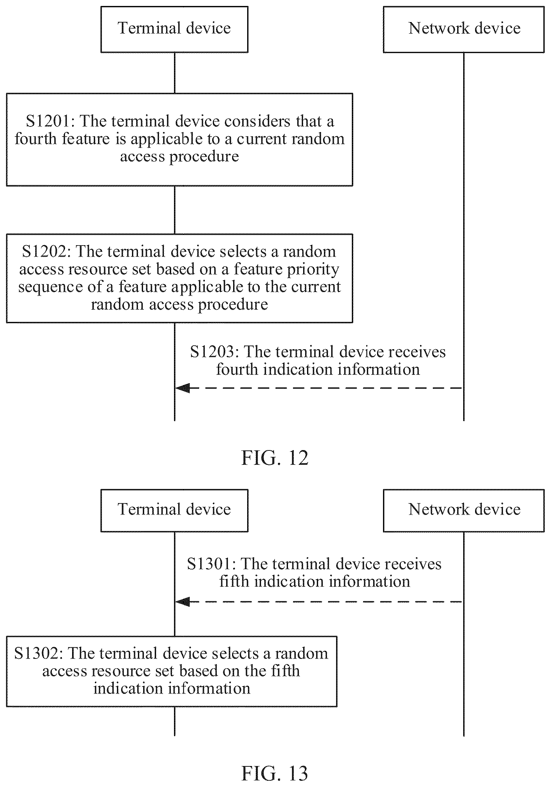

For example, FIG. 12 is a schematic flowchart 7 of a communication method according to an embodiment of this application. The method is applicable to communication between a terminal device and a network device in the foregoing communication system.

Specifically, as shown in FIG. 12, a procedure of the communication method is as follows.

S1201: When a second condition is met, the terminal device considers that a fourth feature is applicable to a current random access procedure.

The second condition may include one or more of the following: There is no random access resource set meeting all features that trigger the current random access procedure; there are one or more random access resource sets that meet a subset of the feature that triggers the current random access procedure; a third feature is applicable to the current random access procedure; or a random access resource set identified by the terminal device by using the third feature does not include a random access resource set associated with the third feature.

The third feature is a feature of a first-type terminal device, the fourth feature is a feature of a second-type terminal device, and the first-type terminal device is a terminal device whose capability is reduced relative to that of the second-type terminal device.

In a possible manner, the first-type terminal device first performs a random access resource set selection process based on the feature of the first-type terminal device. In the random access resource set selection process, when the second condition is met, the first-type terminal device considers that the feature of the second-type terminal device is applicable to the current random access procedure, and continues to perform the random access resource set selection process.

For example, "when the second condition is met" may be "when there is no random access resource set meeting all the features that trigger the current random access procedure, and the third feature is applicable to the current random access procedure". This example may also be understood as follows: When there are one or more random access resource sets applicable to the feature of the current random access procedure, but there is no random access resource set applicable to all the features that trigger the current random access procedure, if the feature of the first-type terminal device is applicable to the current random access procedure, the terminal device considers that the feature of the second-type terminal device is applicable to the current random access procedure.

For example, "when the second condition is met" may be "when there are one or more random access resource sets meeting the subset of the feature that triggers the current random access procedure, and the third feature is applicable to the current random access procedure". This example may also be understood as follows: When there are only one or more random access resource sets meeting the subset of the feature that triggers the current random access procedure, but there is no random access resource set applicable to all the features that trigger the current random access procedure, if the feature of the first-type terminal device is applicable to the current random access procedure, the terminal device considers that the feature of the second-type terminal device is applicable to the current random access procedure.

For example, "when the second condition is met" may be "when the random access resource set identified by the terminal device by using the third feature does not include the random access resource set associated with the third feature". This example may also be understood as follows: When a random access resource set identified by the terminal device by using the feature of the first-type terminal device does not include a random access resource set associated with the feature of the first-type terminal device, the terminal device considers that the feature of the second-type terminal device is applicable to the current random access procedure.

Optionally, that the terminal device considers that the feature of the second-type terminal device is applicable to the current random access procedure may be understood as that in addition to a currently applicable feature, the feature of the second-type terminal device is also applicable to the current random access procedure. For example, the first-type terminal device considers that both the feature of the first-type terminal device and the feature of the second-type terminal device are applicable to the current random access procedure.

That the first-type terminal device is applicable to the current random access procedure may also be understood as that the terminal device is the first-type terminal device. Similarly, that the terminal device considers that the second-type terminal device is applicable to the current random access procedure may also be understood as that the terminal device considers the terminal device itself as the second-type terminal device.

Optionally, when the second condition is not met, the terminal device does not consider that the fourth feature is applicable to the current random access procedure. In other words, when the second condition is not met, the terminal device continues to perform the random access resource selection process, for example, selects a random access resource set based on a feature priority of the feature of the current random access procedure.

Optionally, the first-type terminal device may be eRedCap UE, and the second-type terminal device may be RedCap UE.

S1202: The terminal device selects a random access resource set based on the feature applicable to the current random access procedure.

Optionally, the terminal device selects the random access resource set based on a feature priority sequence of the feature applicable to the current random access procedure.

In a possible implementation, in a process of performing the random access resource, the terminal device determines, according to S1201, the feature applicable to the current random access procedure, and selects or continues to select the random access resource set based on the determined feature. For example, the terminal device selects or continues to select the random access resource set based on a feature priority of the determined feature.

For example, when there is no random access resource set meeting all the features that trigger the current random access procedure, if the feature of the first-type terminal device is applicable to the current random access procedure, the terminal device considers that the feature of the second-type terminal device is applicable to the current random access procedure. After determining that the feature of the second-type terminal device is also applicable to the current random access procedure, the terminal device determines all the features of the current random access procedure. The terminal device selects the random access resource set based on the determined feature of the current random access procedure. In this case, the feature of the current random access procedure includes the feature of the first-type terminal device and the feature of the second-type terminal device.

For example, when there are one or more random access resource sets meeting the subset of the feature that triggers the current random access procedure, if the feature of the first-type terminal device is applicable to the current random access procedure, the terminal device considers that the feature of the second-type terminal device is applicable to the current random access procedure. After determining that the feature of the second-type terminal device is also applicable to the current random access procedure, the terminal device determines all the features of the current random access procedure. The terminal device selects the random access resource set based on the determined feature of the current random access procedure. In this case, the feature of the current random access procedure includes the feature of the first-type terminal device and the feature of the second-type terminal device.

For example, when the random access resource set identified by the terminal device by using the feature of the first-type terminal device does not include the random access resource set associated with the feature of the first-type terminal device, the terminal device considers that the feature of the second-type terminal device is applicable to the current random access procedure. It may be understood that in a process in which the terminal device selects the random access resource set by using the feature priority of the feature of the current random access procedure, if the random access resource set identified by the terminal device by using the feature of the first-type terminal device does not include the random access resource set associated with the feature of the first-type terminal device, the terminal device considers that the feature of the second-type terminal device is applicable to the current random access procedure, and continues to select the random access resource set based on the feature priority.

Optionally, in S1203, the terminal device receives fourth indication information. Correspondingly, the network device sends the fourth indication information.

The fourth indication information indicates that the terminal device is allowed to consider that the fourth feature is applicable to the current random access procedure. Optionally, it may also be understood that the fourth indication information indicates that when the second condition is met, the terminal device is allowed to consider that the fourth feature is applicable to the current random access procedure.

Optionally, the fourth indication information indicates that the terminal device is not allowed to consider that the fourth feature is applicable to the current random access procedure. Optionally, it may also be understood that the fourth indication information indicates that when the second condition is met, the terminal device is not allowed to consider that the fourth feature is applicable to the current random access procedure.

For example, before step S1201, the terminal device receives the fourth indication information from the network device. The terminal device determines, based on the fourth indication information, whether to perform step S1201. For example, when the fourth indication information indicates that the terminal device is allowed to consider that the fourth feature is applicable to the current random access procedure, the terminal device performs step S1201. For another example, when the fourth indication information indicates that the terminal device is not allowed to consider that the fourth feature is applicable to the current random access procedure, the terminal device does not perform step S1201.

In conclusion, in the foregoing embodiment, when the second condition is met, the terminal device extends the feature applicable to the current random access procedure from the third feature to include the fourth feature, so that while the terminal device selects a random access resource set by using the third feature, a possibility that the terminal device selects an appropriate random access resource set is increased. When the second condition is not met, the terminal device does not consider that the fourth feature is applicable to the current random access procedure, so that when the terminal device can select, by using the third feature, the random access resource set that triggers the current random access procedure, or when the terminal device can select, by using the third feature, the random access resource set associated with the third feature, the terminal device may not use the fourth feature for selection. In this way, complexity of selecting a random access resource set by the terminal device is reduced.

Currently, the random access resource set selection process is mainly applicable to a contention-based random access procedure. In a contention-free random access procedure, a network device may identify a terminal device by using a dedicated random access resource, and therefore does not need to identify the terminal device by using a random access resource set. However, when the network device configures a contention-free random access resource, the terminal device may not always perform the contention-free random access procedure. For example, when there is no SSB meeting a condition, the terminal device needs to perform a contention-based random access procedure. The SSB meeting the condition may be an SSB whose quality is greater than or equal to a threshold. In this case, because the terminal device has selected a random access resource set (for example, a random access resource set that is not associated with any feature), the terminal device can select a random access occasion only from a previously selected random access resource set, and send a preamble on the selected random access occasion. In this case, the network device cannot identify the terminal device by receiving the preamble. Consequently, random access fails.

To resolve the foregoing problem, this application provides a method in the following embodiment. The method is applicable to communication between a terminal device and a network device in the foregoing communication system, and includes:

When a third condition is met, the terminal device selects a fourth random access resource set.

The third condition is that the terminal device is provided with a first resource and the fourth random access resource set, and a feature of a first-type terminal device is applicable to a current random access procedure. The first resource is a contention-free random access resource. The fourth random access resource set is a random access resource set associated with only the feature of the first-type terminal device.

Optionally, that the fourth random access resource set is the random access resource set associated with only the feature of the first-type terminal device may also be understood as that the fourth random access resource set is a random access resource set configured with only a feature indication of the first-type terminal device.

When the third condition is not met and a fourth condition is met, the terminal device selects a fifth random access resource set.

The fourth condition is that the terminal device is provided with the first resource and the fifth random access resource set, and the feature of the first-type terminal device is applicable to the current random access procedure. The fifth random access resource set is a random access resource set associated with only a feature of a second-type terminal device.

In other words, that the third condition is not met and the fourth condition is met may be understood as that the terminal device is provided with the first resource and the fifth random access resource set, the feature of the first-type terminal device is applicable to the current random access procedure, and the terminal device is not provided with the fourth random access resource set.

Optionally, the network device provides the terminal device with at least one of the first resource, the fourth random access resource set, and the fifth random access resource set.

Optionally, when the third condition is not met and the fourth condition is not met, the terminal device selects a random access resource set that is not associated with any feature. For example, when the terminal device is provided with the first resource, but is not provided with the fourth random access resource set and the fifth random access resource set, the terminal device selects the random access resource set that is not associated with any feature.

Optionally, a terminal device capability of the first-type terminal device is lower than that of the second-type terminal device. For example, the first-type terminal device may be eRedCap UE, and the second-type terminal device may be RedCap UE.

Optionally, when the contention-based random access procedure is performed, the terminal device selects a random access resource from the selected random access resource set, and sends a preamble to the network device on the selected random access resource.

In conclusion, in the foregoing embodiment, when being provided with a contention-free random access resource, the first-type terminal device may still select a random access resource set associated with the feature of the first-type terminal device or a random access resource set associated with the feature of the second-type terminal device, so that the network device can identify whether the terminal device is the first-type terminal device or the second-type terminal device, and perform special configuration for the terminal device in the random access procedure. In this way, a success rate of the random access procedure is improved. In addition, when the network device does not provide the random access resource set associated with the feature of the first-type terminal device, the terminal device may still select a random access resource associated with the feature of the second-type terminal device, so that the network device performs scheduling or processing for the terminal device based on the second-type terminal device, and therefore a random access success rate of the terminal device is also improved.

For example, FIG. 13 is a schematic flowchart 8 of a communication method according to an embodiment of this application. The method is applicable to communication between a terminal device and a network device in the foregoing communication system.

S1301: The terminal device receives fifth indication information. Correspondingly, the network device sends the fifth indication information.

Optionally, the fifth indication information indicates a manner of selecting a random access resource set by the terminal device. The terminal device determines, based on the fifth indication information, the manner of selecting a random access resource set by the terminal device.

For example, the fifth indication information indicates that the manner of selecting a random access resource set by the terminal device is a first manner. In the first manner, if a random access resource set is configured with a feature indication of a second-type terminal device, the random access resource set is applicable to a random access procedure to which a feature of a first-type terminal device or a feature of the second-type terminal device is applicable. In other words, in the first manner, if the random access resource set is configured with the feature indication of the second-type terminal device, the random access resource set is not applicable to a random access procedure to which neither the feature of the first-type terminal device nor the feature of the second-type terminal device is applicable. In other words, in the first manner, if the feature of the first-type terminal device is applicable to the current random access procedure, the feature of the second-type terminal device is also applicable to the current random access procedure.

For example, the fifth indication information indicates that the manner of selecting a random access resource set by the terminal device is a second manner. In the second manner, when a fifth condition is met, if a random access resource set is configured with a feature indication of a second-type terminal device, the random access resource set is applicable to a random access procedure to which a feature of a first-type terminal device or a feature of the second-type terminal device is applicable. In other words, in the second manner, when the fifth condition is met, if the random access resource set is configured with the feature indication of the second-type terminal device, the random access resource set is not applicable to a random access procedure to which neither the feature of the first-type terminal device nor the feature of the second-type terminal device is applicable. In other words, in the second manner, when the fifth condition is met, if the feature of the first-type terminal device is applicable to a current random access procedure, the feature of the second-type terminal device is also applicable to the current random access procedure. The fifth condition is related to a configured random access resource set and/or a feature that triggers the current random access procedure. Optionally, the fifth condition is related to a random access resource set for which a feature indication of the first-type terminal device is configured. For example, the fifth condition may include that the feature of the first-type terminal device is applicable to the current random access procedure, and/or there is no random access resource set configured with the feature indication of the first-type terminal device.

For example, the fifth indication information indicates that the manner of selecting a random access resource set by the terminal device is a third manner. In the third manner, when there is no random access resource set applicable to a feature of a current random access procedure, if a feature of a first-type terminal device is applicable to the current random access procedure, the terminal device selects a random access resource set based on a feature of a second-type terminal device. That is, the third manner is the manner described in FIG. 6, and details are not described herein again.

Optionally, the fifth indication information is used to determine availability of a sixth random access resource set. For example, the fifth indication information is used to determine availability of the sixth random access resource set for the first-type terminal device. For another example, the fifth indication information indicates availability of the sixth random access resource set for a random access procedure to which the feature of the first-type terminal is applicable. The sixth random access resource set is a random access resource set configured with the feature indication of the second-type terminal device.

In a possible implementation, the fifth indication information indicates that the sixth random access resource set is not applicable to a random access procedure to which the feature of the second-type terminal device is not applicable. In this case, the fifth indication information indicates a first value. It may also be understood that when the fifth indication information indicates the first value, the sixth random access resource set is not applicable to the random access procedure to which the feature of the first-type terminal device is applicable.

In another possible implementation, the fifth indication information indicates that the sixth random access resource set is applicable to the random access procedure to which the feature of the first-type terminal device or the feature of the second-type terminal device is applicable. In this case, the fifth indication information indicates a second value. Optionally, when the fifth indication information indicates the second value, and the fifth condition or a sixth condition is met, the sixth random access resource set is applicable to the random access procedure to which the feature of the first-type terminal device or the feature of the second-type terminal device is applicable. In other words, when the fifth indication information indicates the second value, and the fifth condition is met, the sixth random access resource set is not applicable to the random access procedure to which neither the feature of the first-type terminal device nor the feature of the second-type terminal device is applicable. The sixth condition is that there is no random access resource set applicable to the feature of the current random access procedure, and/or the feature of the first-type terminal device is applicable to the current random access procedure.

In the foregoing examples, whether the fifth indication information indicates the first value or the second value is used as an example. Alternatively, availability of the sixth random access resource set may be indicated based on whether the fifth indication information is configured. This is not limited herein.

S1302: The terminal device selects a random access resource set based on the fifth indication information.

Optionally, the terminal device determines availability of the random access resource set based on the manner of selecting a random access resource set that is indicated by the fifth indication information, and further selects the random access resource set from a random access resource set available for the current random access procedure.

Optionally, the terminal device determines availability of the sixth random access resource set based on availability of the sixth random access resource set that is indicated by the fifth indication information, and further selects the random access resource set from the random access resource set available for the current random access procedure.

In conclusion, in the foregoing embodiment, the network device may indicate, by using the fifth indication information, the manner of selecting a random access resource set by the terminal device, or control availability of the random access resource set by the terminal device, to increase control of a network over the random access resource set, and avoid a random access resource set selection result that is not expected by the network.

For example, an embodiment of this application provides a communication method. The method is applicable to communication between a terminal device and a network device in the foregoing communication system, and includes:

When a fifth condition is met, a sixth random access resource set is applicable to a random access procedure to which a feature of a second-type terminal device is applicable. In other words, when the fifth condition is met, a first-type terminal device considers that the feature of the second-type terminal device meets a current random access procedure.

The fifth condition is related to a configured random access resource set and/or a feature that triggers the current random access procedure. Optionally, the fifth condition is related to a random access resource set for which a feature indication of the first-type terminal device is configured. For example, the fifth condition may include that a feature of the first-type terminal device is applicable to the current random access procedure, and/or there is no random access resource set configured with the feature indication of the first-type terminal device. The sixth random access resource set is a random access resource set configured with a feature indication of the second-type terminal device.

When the fifth condition is not met, the sixth random access resource set is applicable to a random access procedure to which the feature of the first-type terminal device or the feature of the second-type terminal device is applicable. In other words, when the fifth condition is not met, the sixth random access resource set is not applicable to a random access procedure to which neither the feature of the first-type terminal device nor the feature of the second-type terminal device is applicable. In other words, when the fifth condition is not met, the first-type terminal device considers that the feature of the first-type terminal device and the feature of the second-type terminal device meet the current random access procedure.

In conclusion, in the foregoing embodiment, the terminal device may also consider a random access resource set associated with the feature of the second-type terminal device available, so that a possibility that the terminal device selects an appropriate random access resource set is increased.

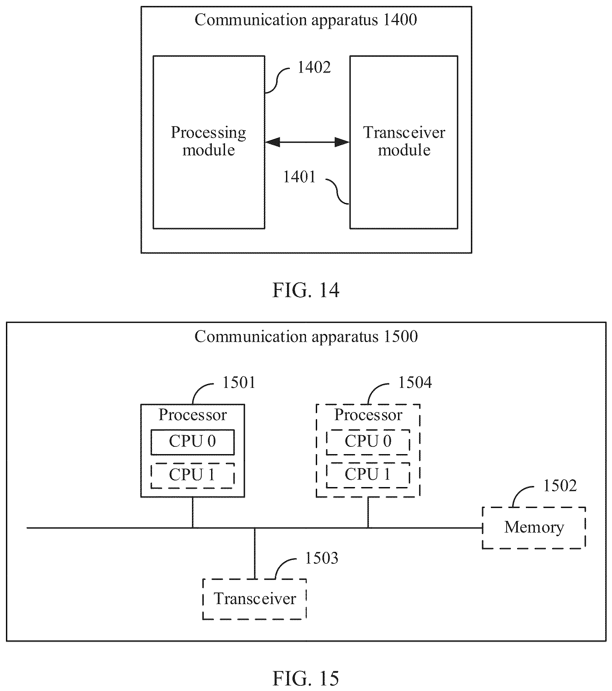

With reference to FIG. 6 to FIG. 13, the foregoing describes in detail the communication methods provided in embodiments of this application. Steps in embodiments may be used in combination. With reference to FIG. 14 and FIG. 15, the following describes in detail communication apparatuses configured to perform the communication methods provided in embodiments of this application.

FIG. 14 is a diagram 1 of a structure of a communication apparatus according to an embodiment of this application. For example, as shown in FIG. 14, the communication apparatus 1400 includes a transceiver module 1401 and a processing module 1402. For ease of description, FIG. 14 shows only main parts of the communication apparatus.

In some embodiments, the communication apparatus 1400 is applicable to the communication system shown in FIG. 5, and performs functions of the terminal device.

The transceiver module 1401 may be configured to perform a function of receiving and sending messages by the terminal device, for example, functions in steps such as S603, S604, S903, S1203, and S1301. The processing module 1402 may perform a function of the terminal device other than receiving and sending messages, for example, functions in steps such as S601, S602, S901, S902, S1201, S1202, and S1302.

Optionally, the transceiver module 1401 may include a sending module and a receiving module. The sending module is configured to implement a sending function of the communication apparatus 1400, and the receiving module is configured to implement a receiving function of the communication apparatus 1400.

Optionally, the communication apparatus 1400 may further include a storage module. The storage module stores a program or instructions. When the processing module 1402 executes the program or the instructions, the communication apparatus 1400 may be enabled to perform the communication method.

It should be noted that the communication apparatus 1400 may be a terminal device, may be a chip (system) or another part or component that may be disposed in the terminal device, or may be an apparatus including the terminal device. This is not limited in this application.

In addition, for technical effect of the communication apparatus 1400, refer to the technical effect of the communication method. Details are not described herein again.

For example, FIG. 15 is a diagram 2 of a structure of a communication apparatus according to an embodiment of this application. The communication apparatus may be a terminal, or may be a chip (system) or another part or component that may be disposed in the terminal. As shown in FIG. 15, the communication apparatus 1500 may include a processor 1501. Optionally, the communication apparatus 1500 may further include a memory 1502 and/or a transceiver 1503. The processor 1501 is coupled to the memory 1502 and the transceiver 1503, for example, may be connected to the memory 1502 and the transceiver 1503 through a communication bus.

The following describes in detail each part of the communication apparatus 1500 with reference to FIG. 15.

The processor 1501 is a control center of the communication apparatus 1500, and may be one processor or may be a collective term of a plurality of processing elements. For example, the processor 1501 is one or more central processing units (central processing units, CPUs), or may be an application-specific integrated circuit (application-specific integrated circuit, ASIC), or may be one or more integrated circuits configured to implement embodiments of this application, for example, one or more microprocessors (digital signal processors, DSPs), or one or more field programmable gate arrays (field programmable gate arrays, FPGAs).

Optionally, the processor 1501 may perform various functions of the communication apparatus 1500 by running or executing a software program stored in the memory 1502 and invoking data stored in the memory 1502, for example, perform the communication methods shown in FIG. 6 to FIG. 13.

During specific implementation, in an embodiment, the processor 1501 may include one or more CPUs, for example, a CPU 0 and a CPU 1 in FIG. 15.

During specific implementation, in an embodiment, the communication apparatus 1500 may also include a plurality of processors, for example, the processor 1501 and a processor 1504 shown in FIG. 15. Each of the processors may be a single-core (single-CPU) processor, or may be a multi-core (multi-CPU) processor. The processor herein may be one or more devices, circuits, and/or processing cores configured to process data (for example, computer program instructions).

The memory 1502 is configured to store a software program for performing the solutions of this application, and the processor 1501 controls execution. For a specific implementation, refer to the foregoing method embodiments. Details are not described herein again.

Optionally, the memory 1502 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer, but is not limited thereto. The memory 1502 may be integrated with the processor 1501, or may exist independently, and is coupled to the processor 1501 through an interface circuit (not shown in FIG. 15) of the communication apparatus 1500. This is not specifically limited in this embodiment of this application.

The transceiver 1503 is configured to communicate with another communication apparatus. For example, the communication apparatus 1500 is a terminal, and the transceiver 1503 may be configured to communicate with a network device or communicate with another terminal device. For another example, the communication apparatus 1500 is a network device, and the transceiver 1503 may be configured to communicate with a terminal or communicate with another network device.

Optionally, the transceiver 1503 may include a receiver and a transmitter (not separately shown in FIG. 15). The receiver is configured to implement a receiving function, and the transmitter is configured to implement a sending function.

Optionally, the transceiver 1503 may be integrated with the processor 1501, or may exist independently, and is coupled to the processor 1501 through the interface circuit (not shown in FIG. 15) of the communication apparatus 1500. This is not specifically limited in this embodiment of this application.

It should be noted that the structure of the communication apparatus 1500 shown in FIG. 15 does not constitute a limitation on the communication apparatus. An actual communication apparatus may include more or fewer parts than those shown in the figure, or combine some parts, or have different part arrangements.

In addition, for technical effect of the communication apparatus 1500, refer to the technical effect of the communication method in the foregoing method embodiments. Details are not described herein again.

An embodiment of this application provides a communication system. The communication system may include a terminal device and a network device.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by software, hardware (for example, a circuit), firmware, or any combination thereof. When software is used to implement the embodiments, all or some of the embodiments may be implemented in a form of a computer program product. The computer program product includes one or more computer instructions or computer programs. When the computer instructions or the computer programs are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually indicates an "or" relationship between associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a terminal device or an apparatus in the terminal device, comprising:
when a third condition is met, selecting a fourth random access resource set, wherein the third condition is that a feature of a first-type terminal device is applicable to a current random access procedure, and a first resource and the fourth random access resource set are provided, wherein the first resource is a contention-free random access resource, and the fourth random access resource set is a random access resource set associated with only the feature of the first-type terminal device; and
when the third condition is not met and a fourth condition is met, selecting a fifth random access resource set, wherein that the third condition is not met and the fourth condition is met means that the feature of the first-type terminal device is applicable to the current random access procedure, the fourth random access resource set is not provided, and the first resource and the fifth random access resource set are provided, wherein the fifth random access resource set is a random access resource set associated with only a feature of a second-type terminal device.

2. The method according to claim 1, wherein the method further comprises:
receiving at least one of the first resource, the fourth random access resource set, and the fifth random access resource set.

3. The method according to claim 1 or 2, wherein the method further comprises:
when the third condition is not met and the fourth condition is not met, selecting a random access resource set that is not associated with any feature, wherein the fourth condition is that the feature of the first-type terminal device is applicable to the current random access procedure, and the first resource and the fifth random access resource set are provided.

4. The method according to any one of claims 1 to 3, wherein the first-type terminal device is an enhanced reduced capability terminal device eRedCap UE, and the second terminal device is a reduced capability terminal device RedCap UE.

5. The method according to any one of claims 1 to 4, wherein the method further comprises:
when a contention-based random access procedure is performed, selecting a random access resource from a selected random access resource set, and sending a preamble on the selected random access resource.

6. A communication method, applied to a terminal device or an apparatus in the terminal device, comprising:
when there is no random access resource set applicable to a feature of a current random access procedure, if the terminal device is a first-type terminal device, determining, by the terminal device, a first random access resource set based on a feature of a second-type terminal device, wherein the first-type terminal device is a terminal device whose capability is reduced relative to that of the second-type terminal device; and
performing, by the terminal device, the random access procedure by using the first random access resource set.

7. The method according to claim 6, wherein the method further comprises:
receiving, by the terminal device, first indication information, wherein the first indication information indicates that the first-type terminal device is allowed to determine the first random access resource set based on the feature of the second-type terminal device.

8. The method according to claim 7, wherein the method further comprises:
receiving, by the terminal device, second indication information, wherein the second indication information indicates that the first-type terminal device is allowed to use a second random access resource set, and the first random access resource set is one of the second random access resource set that is allowed to be used by the first-type terminal device.

9. The method according to any one of claims 6 to 8, wherein the method further comprises:
when there is no random access resource set applicable to the feature of the current random access procedure, if the terminal device is not the first-type terminal device, selecting, by the terminal device, a random access resource set that has no associated feature, to perform the random access procedure.

10. The method according to any one of claims 6 to 9, wherein the method further comprises:
determining, by the terminal device based on an indication associated with a random access resource set and the feature of the current random access procedure, whether the random access resource set is applicable to the current random access procedure, wherein the indication associated with the random access resource set represents a feature associated with the random access resource set.

11. The method according to any one of claims 6 to 10, wherein the first-type terminal device is an enhanced reduced capability eRedCap terminal device, and the second-type terminal is a reduced capability RedCap terminal device.

12. The method according to any one of claims 6 to 11, wherein the feature comprises at least one of the following:
a RedCap terminal device, small data transmission, radio access network slicing, a coverage enhancement feature, or a RedCap terminal device.

13. A communication method, applied to a terminal device or an apparatus in the terminal device, comprising:
when there is no random access resource set applicable to a feature of a current random access procedure, if the terminal device is a first-type terminal device and there is a third random access resource set, selecting, by the terminal device, the third random access resource set, wherein the third random access resource set is associated with only an indication of a second-type terminal, and the first-type terminal device is a terminal device whose terminal device capability is reduced relative to that of the second-type terminal device; and
performing, by the terminal device, the random access procedure by using the third random access resource set.

14. The method according to claim 13, wherein the method further comprises:
receiving, by the terminal device, third indication information, wherein the third indication information indicates that the first-type terminal is allowed to use the third random access resource set.

15. The method according to claim 13 or 14, wherein the method further comprises:
when there is no random access resource set applicable to the feature of the current random access procedure and a first condition is met, selecting, by the terminal device, a random access resource set that has no associated feature, to perform the random access procedure, wherein
the first condition comprises at least one of the following:
the terminal device is not the first-type terminal device; or
there is no random access resource set configured with only the indication of the second-type terminal.

16. The method according to any one of claims 13 to 15, wherein the method further comprises:
determining, by the terminal device based on an indication associated with a random access resource set and the feature of the current random access procedure, whether the random access resource set is applicable to the current random access procedure, wherein the indication associated with the random access resource set represents a feature associated with the random access resource set.

17. The method according to any one of claims 13 to 16, wherein the indication of the second-type terminal represents that a non-second-type terminal device cannot use the random access resource set in a random access procedure.

18. The method according to any one of claims 13 to 17, wherein the first-type terminal device is an enhanced reduced capability eRedCap terminal device, and the second-type terminal is a reduced capability RedCap terminal device.

19. The method according to any one of claims 13 to 18, wherein the feature comprises at least one of the following: a RedCap terminal device, small data transmission, radio access network slicing, a coverage enhancement feature, or an eRedCap terminal device.

20. A communication apparatus, wherein the apparatus comprises a processing module, and the processing module is configured to:
when a third condition is met, select a fourth random access resource set, wherein the third condition is that a feature of a first-type terminal device is applicable to a current random access procedure, and a first resource and the fourth random access resource set are provided, wherein the first resource is a contention-free random access resource, and the fourth random access resource set is a random access resource set associated with only the feature of the first-type terminal device; and
when the third condition is not met and a fourth condition is met, select a fifth random access resource set, wherein that the third condition is not met and the fourth condition is met means that the feature of the first-type terminal device is applicable to the current random access procedure, the fourth random access resource set is not provided, and the first resource and the fifth random access resource set are provided, wherein the fifth random access resource set is a random access resource set associated with only a feature of a second-type terminal device.

21. The apparatus according to claim 20, wherein the apparatus further comprises a transceiver module; and
the transceiver module is configured to receive at least one of the first resource, the fourth random access resource set, and the fifth random access resource set.

22. The apparatus according to claim 20 or 21, wherein the processing module is further configured to: when the third condition is not met and the fourth condition is not met, select a random access resource set that is not associated with any feature, wherein the fourth condition is that the feature of the first-type terminal device is applicable to the current random access procedure, and the first resource and the fifth random access resource set are provided.

23. The apparatus according to any one of claims 20 to 22, wherein the first-type terminal device is an enhanced reduced capability terminal device eRedCap UE, and the second terminal device is a reduced capability terminal device RedCap UE.

24. The apparatus according to any one of claims 20 to 23, wherein the processing module is further configured to: when a contention-based random access procedure is performed, select a random access resource from a selected random access resource set, and send a preamble on the selected random access resource.

25. A communication apparatus, wherein the apparatus comprises a processing module;
the processing module is configured to: when there is no random access resource set applicable to a feature of a current random access procedure, if a terminal device is a first-type terminal device, determine a first random access resource set based on a feature of a second-type terminal device, wherein the first-type terminal device is a terminal device whose capability is reduced relative to that of the second-type terminal device; and
the processing module is further configured to perform the random access procedure by using the first random access resource set.

26. The apparatus according to claim 25, wherein the apparatus further comprises a transceiver module; and
the transceiver module is configured to receive first indication information, wherein the first indication information indicates that the first-type terminal device is allowed to determine the first random access resource set based on the feature of the second-type terminal device.

27. The apparatus according to claim 26, wherein
the transceiver module is further configured to receive second indication information, wherein the second indication information indicates that the first-type terminal device is allowed to use a second random access resource set, the second random access resource set is related to the second-type terminal, and the first random access resource set is one of the second random access resource set that is allowed to be used by the first-type terminal device.

28. The apparatus according to any one of claims 25 to 27, wherein
the processing module is further configured to: when there is no random access resource set applicable to the feature of the current random access procedure, if the terminal device is not the first-type terminal device, select a random access resource set that has no associated feature, to perform the random access procedure.

29. The apparatus according to any one of claims 25 to 28, wherein
the processing module is further configured to determine, based on an indication associated with a random access resource set and the feature of the current random access procedure, whether the random access resource set is applicable to the current random access procedure, wherein the indication associated with the random access resource set represents a feature associated with the random access resource set.

30. The apparatus according to any one of claims 25 to 29, wherein the first-type terminal device is an enhanced reduced capability eRedCap terminal device, and the second-type terminal is a reduced capability RedCap terminal device.

31. The apparatus according to any one of claims 25 to 30, wherein the feature comprises at least one of the following:
a RedCap terminal device, small data transmission, radio access network slicing, a coverage enhancement feature, or a RedCap terminal device.

32. A communication apparatus, wherein the apparatus comprises a processing module;
the processing module is configured to: when there is no random access resource set applicable to a feature of a current random access procedure, if the terminal device is a first-type terminal device and there is a third random access resource set, select the third random access resource set, wherein the third random access resource set is associated with only an indication of a second-type terminal, and the first-type terminal device is a terminal device whose terminal device capability is reduced relative to that of the second-type terminal device; and
the processing module is further configured to perform the random access procedure by using the third random access resource set.

33. The apparatus according to claim 32, wherein the apparatus further comprises a transceiver module; and
the transceiver module is further configured to receive third indication information, wherein the third indication information indicates that the first-type terminal is allowed to use the third random access resource set.

34. The apparatus according to claim 32 or 33, wherein
the processing module is further configured to: when there is no random access resource set applicable to the feature of the current random access procedure and a first condition is met, select a random access resource set that has no associated feature, to perform the random access procedure, wherein
the first condition comprises at least one of the following:
the terminal device is not the first-type terminal device; or
there is no random access resource set configured with only the indication of the second-type terminal.

35. The apparatus according to any one of claims 32 to 34, wherein
the processing module is further configured to determine, based on an indication associated with a random access resource set and the feature of the current random access procedure, whether the random access resource set is applicable to the current random access procedure, wherein the indication associated with the random access resource set represents a feature associated with the random access resource set.

36. The apparatus according to any one of claims 32 to 35, wherein the indication of the second-type terminal represents that a non-second-type terminal device cannot use the random access resource set in a random access procedure.

37. The apparatus according to any one of claims 32 to 36, wherein the first-type terminal device is an enhanced reduced capability eRedCap terminal device, and the second-type terminal is a reduced capability RedCap terminal device.

38. The apparatus according to any one of claims 32 to 37, wherein the feature comprises at least one of the following: a RedCap terminal device, small data transmission, radio access network slicing, a coverage enhancement feature, or an eRedCap terminal device.

39. A communication apparatus, wherein the communication apparatus comprises a processor; and
the processor is configured to perform the communication method according to any one of claims 1 to 19.

40. A communication apparatus, wherein the communication apparatus comprises a processor and a memory, the memory is configured to store computer instructions, and when the processor executes the instructions, the communication apparatus is enabled to perform the communication method according to any one of claims 1 to 19.

41. A communication chip, wherein the communication chip stores instructions, and when the chip runs on a communication device, the method according to any one of claims 1 to 19 is implemented.

42. A communication system, wherein the communication system comprises at least one apparatus configured to perform the method according to any one of claims 1 to 19.

43. A computer-readable storage medium, wherein the computer-readable storage medium comprises a computer program or instructions, and when the computer program or the instructions are run on a computer, the computer is enabled to perform the communication method according to any one of claims 1 to 19.

44. A computer program product, wherein the computer program product comprises a computer program or instructions, and when the computer program or the instructions are run on a computer, the computer is enabled to perform the communication method according to any one of claims 1 to 19.
